# EUROPÄISCHE PATENTANMELDUNG

(11) **EP 4 209 336 A1**
(43) Veröffentlichungstag der Anmeldung: **12.07.2023**
(21) Anmeldenummer: 22150950.8
(22) Anmeldetag: 11.01.2022
(51) Int. Cl.: B29D 30/06, B29D 30/00, G06K 19/077

(54) **HEIZBALG-VORRICHTUNG FÜR EINE REIFENHEIZ-PRESSVORRICHTUNG ZUM VULKANISIEREN EINES FAHRZEUGREIFENS**

(71) Anmelder: Siemens Aktiengesellschaft, 80333 München (DE)
(72) Erfinder: Freller, Robert, 91207 Lauf (DE); Lanzer, Gunter, 90408 Nürnberg (DE); Müller, Dietmar, 91074 Herzogenaurach (DE)
(74) Vertreter: Siemens Patent Attorneys

(57) **Zusammenfassung**

Heizbalg-Vorrichtung (130) für eine Reifenheiz-Pressvorrichtung (100) zum Vulkanisieren eines Fahrzeugreifens (150),
wobei die Heizbalg-Vorrichtung (130) zur Unterstützung eines Vulkanisiervorgangs eines in der Reifenheiz-Pressvorrichtung (100) befindlichen Fahrzeugreifens ausgebildet und eingerichtet ist, und
wobei die Heizbalg-Vorrichtung (130) einen elastischen Heizbalg (120) sowie eine Einspannvorrichtung (110) zur Befestigung des elastischen Heizbalgs (120) umfasst,
wobei der Heizbalg eine Heizbalg-ID-Komponente (122) umfasst, die eine Heizbalg-ID-Information zur eindeutigen Identifikation des Heizbalgs (120) umfasst,
und wobei die Heizbalg-Vorrichtung (130) weiterhin zur Montage in der Reifenheiz-Pressvorrichtung (100) ausgebildet und eingerichtet ist, wobei
die Einspannvorrichtung (110) eine Spannvorrichtungs-ID-Komponente (118) umfasst, die eine Spannvorrichtungs-Information umfasst,
wobei die Spannvorrichtungs-ID-Komponente (118) derart ausgebildet, eingerichtet und an der Einspannvorrichtung (110) angebracht ist, dass die Spannvorrichtungs-Information maschinell erfassbar ist,
und dass weiterhin durch Erfassen der Spannvorrichtungs-Information die Heizbalg-ID-Information ermittelbar ist.

## Beschreibung

Die vorliegende Erfindung betrifft eine Heizbalg-Vorrichtung für eine Reifenheiz-Pressvorrichtung zum Vulkanisieren eines Fahrzeugreifens,
wobei die Heizbalg-Vorrichtung zur Unterstützung eines Vulkanisiervorgangs eines in der Reifenheiz-Pressvorrichtung befindlichen Fahrzeugreifens ausgebildet und eingerichtet ist, und wobei die Heizbalg-Vorrichtung einen elastischen Heizbalg sowie eine Einspannvorrichtung zur Befestigung des elastischen Heizbalgs umfasst,
wobei der Heizbalg eine Heizbalg-ID-Komponente umfasst, die eine Heizbalg-ID-Information zur eindeutigen Identifikation des Heizbalgs umfasst,
und wobei die Heizbalg-Vorrichtung weiterhin zur Montage in der Reifenheiz-Pressvorrichtung ausgebildet und eingerichtet ist.

Derartige Heizbalg-Vorrichtungen sind aus dem Stand der Technik bekannt.

So offenbart z.B. die Patentschrift EP 3411222 B1 einen elastischen Heizbalg, der einen RFID-Tag zur Identifikation des Heizbalgs umfasst. Der RFID-Tag ist zumindest teilweise in den Wulst der Reifenvulkanisierblase eingekapselt, wo er im Vergleich zum Rest der Blasenwand einer minimalen Dehnung ausgesetzt ist. Die Anbringung des RFID-Tags im Wulst des Heizbalgs verringert die strukturelle Belastung des Tags im Vergleich zu einer möglichen Anbringung des RFID-Tags entlang der Wand, da der Blasenwulst sicher in der Reifenvulkanisierpresse eingespannt ist. Somit ist der Wulst während des Reifenvulkanisiervorgangs ebenfalls einer geringeren Dehnung und Beanspruchung ausgesetzt als der Rest des Heizbalgs. Die Einbindung eines RFID-Tags in die Gummistruktur einer Reifenvulkanisierblase ermöglicht eine individuelle Identifizierung einer Reifenheizblase. Die Identifikationsmöglichkeit einzelner oder mehrerer Blasen besteht dabei auch dann, wenn sie sich in der Versandverpackung oder dem Karton der Reifenvulkanisierblase befinden, ohne dass ein Heizbalg einzeln entnommen und gescannt werden muss.

Es ist ein Nachteil des Standes der Technik, dass der RFID-Tag schwieriger auszulesen ist, wenn der Heizbalg in der dafür vorgesehenen Halterung der Reifenvulkanisierpresse eingespannt ist. Ein Grund dafür ist beispielsweise, dass in einer Reifenvulkanisierpresse viele metallische Komponenten verbaut sind, die die Ausbreitung von für das Auslesen verwendeten Funksignalen erschweren oder auch unmöglich machen, wenn die Presse mitsamt der Heizblase im betriebsfertigen Zustand ist.

Daher ist es eine Aufgabe der vorliegenden Erfindung, ein verbessertes Verfahren und eine entsprechende Vorrichtung zur Verfügung zu stellen, welche eine verbesserte, einfachere und/oder zuverlässigere Identifikation von Komponenten einer Reifenheizpresse, insbesondere eines Heizbalgs, ermöglicht.

Diese Aufgabe wird gelöst durch eine Heizbalg-Vorrichtung mit den Merkmalen des Patentanspruch 1.

Eine solche Heizbalg-Vorrichtung ist für eine Reifenheiz-Pressvorrichtung zum Vulkanisieren eines Fahrzeugreifens ausgebildet und eingerichtet,
wobei die Heizbalg-Vorrichtung zur Unterstützung eines Vulkanisiervorgangs eines in der Reifenheiz-Pressvorrichtung befindlichen Fahrzeugreifens ausgebildet und eingerichtet ist.

Die Heizbalg-Vorrichtung umfasst einen elastischen Heizbalg sowie eine Einspannvorrichtung zur Befestigung des elastischen Heizbalgs, wobei der Heizbalg eine Heizbalg-ID-Komponente umfasst, die eine Heizbalg-ID-Information zur eindeutigen Identifikation des Heizbalgs umfasst und wobei die Heizbalg-Vorrichtung weiterhin zur Montage in der Reifenheiz-Pressvorrichtung ausgebildet und eingerichtet ist.

Weiterhin umfasst die Einspannvorrichtung eine Spannvorrichtungs-ID-Komponente, die wiederum eine Spannvorrichtungs-Information umfasst, wobei die Spannvorrichtungs-ID-Komponente derart ausgebildet, eingerichtet und an der Einspannvorrichtung angebracht ist, dass die Spannvorrichtungs-Information maschinell erfassbar ist. Dabei ist das System und/oder die Heizbalg-Vorrichtung derart ausgebildet und eingerichtet, dass durch Erfassen der Spannvorrichtungs-Information die Heizbalg-ID-Information ermittelbar ist.

Im normalen Arbeitsbetrieb einer Reifenheiz Pressvorrichtung ist der Heizbalg in der Regel in der Spannvorrichtung fixiert. Da der Heizbalg allerdings normalerweise aus elastischem Material besteht, während die ein Einspannvorrichtung aus einem festen bzw. harten Material, wie beispielsweise einem Metall, besteht, kann die mechanische Belastung einer an der Einspannvorrichtung angebrachten Spannvorrichtungs-ID-Komponente während eines Betriebs der Reifenheiz-Pressvorrichtung erheblich geringer sein als eine mechanische Belastung der am Heizbalg angebrachten Heizbalg-ID-Komponente. Ein Grund dafür ist die während des Betriebs der Reifenheiz-Pressvorrichtung teilweise durchaus erhebliche Expansion des Heizbalgs.

Eine solche mechanische Belastung kann beispielsweise bei optisch erfassbaren ID-Informationen zu einer Verzerrung der Informationen, und damit zu Fehlern beim Erfassen oder einer Unleserlichkeit führen. Weiterhin kann, beispielsweise bei einer als eine elektronische Komponente ausgestalteten ID-Komponenten, die mechanische Belastung zu Funktionsstörungen und sogar zu Beschädigungen der Komponente führen, die ebenfalls zu Fehlern beim Erfassen der gespeicherten Information oder sogar zu Funktionsunfähigkeit führen können.

Da eine an der Spannvorrichtung angebrachte Spannvorrichtungs-ID-Komponente in der Regel solchen extremen mechanischen Belastungen nicht ausgesetzt ist, ist die Fehleranfälligkeit beim Erfassen der in der Spannvorrichtungs-ID-Komponente vorgehaltenen oder gespeicherten Daten verringert, zum Teil erheblich verringert.

Auch die in einem Heizbalg verwendeten heißen Gase oder Flüssigkeiten können zu einer erheblichen Belastung der Heizbalg-ID-Komponente führen, die durchaus größer sein kann, als die entsprechende Temperatur-Belastung einer vorteilhaft angebrachten Spannvorrichtungs-ID-Komponente. Auch dadurch kann die Fehleranfälligkeit beim Erfassen einer Information einer Spannvorrichtungs-ID-Komponente geringer sein als diejenige beim Erfassen einer Information einer Heizbalg-ID-Komponente - insbesondere während des Betriebs einer Heizbalg-Vorrichtung.

Da die Heizbalg-ID-Information nach einem Erfassen der Spannvorrichtung-Information ermittelbar ist, und das Erfassen der Spannvorrichtung-Information aus den vorstehend genannten Gründen einfacher als das Erfassen der Heizbalg-ID-Information sein kann, führt die Ermittlung der Heizbalg-ID-Information über eine Erfassung der Spannvorrichtung-Information zu einer verbesserte und/oder auch einfachere Möglichkeit eine Identifikationsinformation des Heizbalgs zu bestimmen.

Unter einer Reifenheiz-Pressvorrichtung, auch als Vulkanisierpresse oder "Curing Press" bezeichnet, wird eine Maschine oder Anlage verstanden, welche zum Vulkanisieren von Fahrzeugreifen ausgebildet und eingerichtet ist. Bei diesem Verfahrensschritt im Rahmen der Produktion von Fahrzeugreifen handelt es sich um einen Aushärtungsschritt, bei welchem der entsprechende Fahrzeugreifen seine endgültige Form erhält. Bei diesem Aushärtungsprozess wird er eine bestimmte Zeit lang mit einem geeigneten Druck und einer geeigneten Temperatur vulkanisiert. Während dieses Arbeitsschritts wird der Rohkautschuk in biegsames und elastisches Gummi umgewandelt. Außerdem erhält der Reifen in einer entsprechenden Form der Vulkanisierpresse bzw. der Reifenheiz-Pressvorrichtung sein Profil und seine Seitenwandmarkierungen.

Üblicherweise umfasst eine solche Vulkanisierpresse ein oder zwei Formen, welche je einen sogenannten Reifenrohling oder auch "Green Tire" aufnehmen können. Eine solche Vulkanisierpresse umfasst in der Regel Leitungssysteme für heiße Gase, Flüssigkeiten oder Vakuum sowie Transportbänder zum Zu- und Abtransportieren der Reifenrohlinge sowie der fertig Vulkanisierten Fahrzeugreifens.

Im Rahmen eines Vulkanisiervorgangs eines Reifenrohling in einer solchen Reifenheiz-Pressvorrichtung wird dann in der Regel ein sogenannter Heizbalg (Englisch: "bladder") im Innenbereich des Reifenrohlings, ähnlich einem Fahrradschlauch, verwendet. Um den Vulkanisiervorgang zu unterstützen, wird dann diesem Heizbalg ein heißes Gas oder eine heiße Flüssigkeit unter hohem Druck zugeführt. Auf diese Weise drückt der Heizbalg den Reifenrohling in die Form, wobei dann z.B. Reifenprofil und Beschriftungen eingeprägt werden. Weiterhin wird durch die hohe Temperatur des heißen Gases oder der heißen Flüssigkeit den Vulkanisiervorgang des Reifens ausgelöst. Nach dem Vulkanisiervorgang wird der nun vulkanisierte Fahrzeugreifen der entsprechenden Form entnommen und dem nächsten Prozessschritt der Reifenherstellung zugeführt.

Unter einem Vulkanisiervorgang eines Fahrzeugreifens werden im Rahmen der vorliegenden Beschreibung beispielsweise zumindest alle Arbeitsschritte vom Einbringen eines unbearbeiteten Reifens (eines sogenannten "Green Tire" oder Reifenrohlings) in die Reifenheiz-Pressvorrichtung bis zum Entnehmen eines fertig vulkanisierten und gegebenenfalls weiterbearbeiteten Reifens aus der Reifenheiz-Pressvorrichtung verstanden. Auch z.B. eine Vorbereitung der Reifenheiz-Pressvorrichtung für die Bearbeitung eines unbearbeiteten Reifens und auch eine entsprechende Nachbereitung der Reifenheiz-Pressvorrichtung nach einer Bearbeitung bzw. einem Vulkanisieren eines Reifens kann im Rahmen der vorliegenden Beschreibung dem Vulkanisier-vorgang zugeordnet sein.

Die Heizbalg-Vorrichtung umfasst die Einspannvorrichtung mit dem daran montiertem Heizbalg.

Heizbalg-Vorrichtung ist derart ausgebildet und eingerichtet, dass durch Füllen der Heizbalg-Vorrichtung mit einem Gas oder einer Flüssigkeit mit einem geeigneten Druck der elastische Heizbalg expandierbar ist.

Die Heizbalg Vorrichtung kann lösbar-verbindbar mit der Reifenheiz-Pressvorrichtung gekoppelt sein. In der Regel kann der Heizbalg eine im Vergleich zur gesamten Reifenheiz-Pressvorrichtung, und auch anderen Komponenten der Reifenheiz-Pressvorrichtung, eine relativ geringe Lebensdauer haben. Beispielsweise kann ein Heizbalg nach z.B. einigen 100 bis einigen 1000 Betriebszyklen (wobei ein Betriebszyklus der Herstellung bzw. Vulkanisieren eines Reifens zugeordnet ist) bereits solche Gebrauchsspuren bzw. Schäden aufweisen, dass er eine verminderte Eignung zum Herstellen qualitativ hochwertiger Reifen hat bzw. dafür unbrauchbar geworden ist.

Die Heizbalg-Vorrichtung dann derart lösbar-verbindbar mit der Reifenheiz-Pressvorrichtung gekoppelt sein, dass sie beispielsweise zum Auswechseln eines Heizbalgs oder auch zum Austausch mit einer weiteren Heizbalg-Vorrichtung aus der Reifenheiz-Pressvorrichtung entnehmbar ist. Zum Auswechseln des Heizbalgs kann dann bei der entnommenen Heizbalg-Vorrichtung der alte Heizbalg von der Einspannvorrichtung gelöst werden und dann nachfolgend ein neuer Heizbalg mit der Einspannvorrichtung zu einer erneuerten Heizbalg-Vorrichtung verbunden werden. Diese erneuerte Heizbalg-Vorrichtung mit dem neuen Heizbalg wird dann nachfolgend wieder in die Reifenheiz-Pressvorrichtung eingebaut um nachfolgend weiterhin Reifen zu Vulkanisieren.

Im Rahmen des Betriebs einer Reifenheiz-Pressvorrichtung kann eine Heizbalg-Vorrichtung beispielsweise einen passiven Zustand aufweisen. Bei diesem passiven Zustand ist der Heizbalg entspannt ("abgelassen") und/oder nicht mit heißen Medien (Flüssigkeiten und/oder Gasen) unter Druck befüllt. In diesem passiven Zustand kann die Heizbalg-Vorrichtung beispielsweise derart angeordnet, ausgebildet und eingerichtet sein, dass ein Reifen aus der Reifenheiz-Pressvorrichtung entnehmbar oder in diese einbringbar ist.

Weiterhin kann die Heizbalg-Vorrichtung im Rahmen des Betriebs einer Reifenheiz-Pressvorrichtung auch in einem aktiven Zustand vorliegen. In diesem aktiven vor Zustand ist die Heizbalg-Vorrichtung derart angeordnet, ausgebildet und eingerichtet, dass sie mit heißen Medien befüllbar ist oder befüllt ("aufgeblasen") ist, um einen Vulkanisiervorgang eines in der Reifenheiz-Pressvorrichtung befindlichen Reifens zu unterstützen.

Der Heizbalg (im Englischen z.B. auch als "Bladder" oder "Tire Curing Bladder" bezeichnet) ist als eine elastische Blase (z.B. aus Gummi oder einem vergleichbaren elastischen Material) ausgebildet und eingerichtet, die vermittels Zufuhr eines Gases oder einer Flüssigkeit aufgepumpt bzw. expandiert, und vermittels Ablassens und/oder Absaugen von darin enthaltenem Gas oder von darin enthaltener Flüssigkeit entspannt werden kann. Dabei kann der Heizbalg beispielsweise derart ausgebildet und eingerichtet sein, dass er sich beim Befüllen mit einem Gas oder einer Flüssigkeit ausdehnt, und beim Entleeren wieder entsprechend kontrahiert.

Dabei kann der Heizbalg z.B. weiterhin derart ausgebildet und eingerichtet sein, dass das zuführbare oder zugeführte Gas bzw. die zugeführte oder zuführbare Flüssigkeit beispielsweise Temperaturen von bis zu 150 Grad Celsius, vorteilhafterweise von bis zu 200 Grad Celsius und weiterhin vorteilhafterweise bis zu 250 oder 300 Grad Celsius aufweisen kann.

Der Heizbalg kann weiterhin derart ausgebildet und eingerichtet sein, dass als Gase beispielsweise Luft, Wasserdampf, Stickstoff und/oder weitere Gase - u.a. auch mit den o.g. Temperaturen - zugeführt werden können. Als Flüssigkeit wird z.B. häufig Wasser verwendet.

Der Heizbalg kann dabei derart ausgebildet und eingerichtet sein, dass er, zumindest wenn er innerhalb eines Fahrzeugreifens bzw. Reifenrohlings befindlich ist, einem Druck von bis zu 30 bar oder mehr, oder auch einem Unterdruck bis zu -1 bar, widerstehen kann.

Eine besondere Rolle im Rahmen einer Überwachung eines Vulkanisiervorgangs in einer Reifenheiz-Pressvorrichtung spielt eine Überwachung des Heizbalgs. So können beispielsweise Risse und/oder Lecks im Material des Heizbalg dazu führen, dass heißes Gas oder heiße Flüssigkeit in den Zwischenraum zwischen Heizbalg und Reifenrohling eintritt und dazu führt, dass der erzeugte Fahrzeugreifen dann fehlerhaft wird und/oder eine verminderte Qualität aufweist. Wird ein solcher Riss oder Defekt im Heizbalg beispielsweise zu spät erkannt, kann dies dazu führen, dass auch eine größere Menge an Fahrzeugreifen mit verminderter Qualität oder sogar an unbrauchbaren Fahrzeugreifen in der Reifenheiz-Pressvorrichtung erzeugt wird.

Daher ist es vorteilhaft, derartige Schäden in einem Heizbalg frühzeitig zu erkennen, oder, besser noch, bereits vor Eintritt des eigentlichen Defekts festzustellen, dass eine solche Schädigung in naher Zukunft auftreten könnte. Dies kann beispielsweise erfolgen, indem man beispielsweise bereits entsprechende Vorläufer eines solches Defektes, beispielsweise entsprechende Mikrorisse, erkennt. Hierfür kann es z.B. vorteilhaft sein, die Zahl der mit einem Heizbalg bereits vulkanisierten Fahrzeugreifen zu protokollieren, um z.B. beim Erreichen einer typischen Lebensdauer eines Heizbalgs - bzw. rechtzeitig davor - den Heizbalg auf eventuelle Schäden oder sich andeutende Schäden zu überprüfen. In einer vorteilhaften Ausgestaltung kann eine solche Überprüfung ab einem solchen Zeitpunkt dann regelmäßig bzw. regelmäßiger durchgeführt werden.

Die Einspannvorrichtung für den Heizbalg kann beispielsweise ein oder mehrere sogenannte Spannringe umfassen, welche zur unmittelbaren Montage des Heizbalgs ausgebildet und eingerichtet sind. Dafür kann ein Spannring beispielsweise eine Nut zur Aufnahme eines entsprechenden Randwulsts des Heizbalgs aufweisen. Weiterhin kann die Einspannvorrichtung beispielsweise einen oder mehrere Spannring-Träger oder - Trageeinrichtungen aufweisen, mit welchen der eine oder die mehreren Spannringe dann zur Heizbalg-Vorrichtung zusammen montiert werden beziehungsweise zusammenmontierbar sind. Weiterhin kann die Einspannvorrichtung derart ausgebildet und eingerichtet sein, dass sie vermittels des Spannring-Trägers bzw. die Spannring-Trageeinrichtung in der Reifenheiz-Pressvorrichtung montiert ist oder montierbar ist.

Dabei können einzelne Baugruppen oder Elemente der Einspannvorrichtung gegeneinander bewegbar sein, oder auch lösbar verbunden oder lösbar verbindbar sein.

Der Spannring bzw. gegebenenfalls zumindest einer der Spannringe kann dabei derart beweglich im Rahmen der Heizbalg-Vorrichtung montiert sein, dass sich die Anordnung der Spannvorrichtung in einem aktiven und einem passiven Zustand gemäß der vorliegenden Beschreibung unterscheidet.

Die Einspannvorrichtung kann dabei aus mechanisch festen, starren und/oder im Wesentlichen nicht flexiblen Materialen und/oder Komponenten bestehen. Die Einspannvorrichtung kann beispielsweise aus entsprechenden metallischen Komponenten und/oder Materialien, keramischen Komponenten und/oder Materialien oder auch entsprechenden Kunststoff Komponenten und/oder Materialien bestehen bzw. derartige Komponenten und/oder Materialien umfassen. Dabei können die Komponenten und/oder Materialien derart ausgebildet und eingerichtet sein, dass die festen, starren und/oder nicht-flexiblen Eigenschaften der Materialien und/oder Komponenten auch bei höheren Temperaturen, beispielsweise bis zu 200°, bis zu 250° oder auch bis zu 300° vorliegen.

Die in der vorliegenden Beschreibung genannten ID-Komponenten, z.B. die Heizbalg-ID-Komponente und die Spannvorrichtungs-ID-Komponente, können zur maschinellen Erfassung der darin gespeicherten Information bzw. Informationen, z.B. einer Heizbalg-ID-Information, einer Spannvorrichtungs-Information und/oder einer Spannvorrichtungs-ID-Information, ausgebildet und eingerichtet sein.

Dass eine Information in einer der genannten ID-Komponenten gespeichert ist, bedeutet, dass die Information zumindest mehrfach, im Allgemeinen aber auch längerfristig, aus der ID-Komponente auslesbar ist. Eine solche ID-Komponente kann beispielsweise als eine elektronische Einrichtung oder Baugruppe ausgebildet und eingerichtet sein, welche z. B. eine Speichereinrichtung zur Speicherung einer solchen Information umfasst. Eine hierin gespeicherte Information kann beispielsweise über Funk ausgelesen werden oder auslesbar sein oder auch über eine elektrische oder elektronische Verbindung. Eine solche ID-Komponente kann beispielsweise als RFID-Chip, als NFC-Chip, als WLAN-Chip, als Mobilfunk-Chip oder vergleichbare elektronische Einrichtungen ausgebildet und eingerichtet sein.

Weiterhin kann eine ID-Komponente auch als ein grafisches Element ausgebildet und eingerichtet sein, auf welcher die gespeicherte Information optisch erfassbar ist. Solch eine ID-Komponente kann beispielsweise ebenfalls als eine elektronische Einrichtung mit einer Speichereinrichtung zur Speicherung von Informationen und einem entsprechenden Display zur Darstellung optisch erkannbarer Informationen ausgebildet und eingerichtet sein. Weiterhin kann eine solche ID-Komponente beispielsweise auch als eine Trägerstruktur mit darauf dauerhaft angebrachten optisch erkennbaren Zeichen ausgebildet sein. Die optisch erfassbare Information kann beispielsweise als Schrift, als Zeichenkette, als binär- oder Hexadezimal-Code, als Barcode, als QR-Code oder als vergleichbare optisch erfassbare Information ausgebildet und eingerichtet sein. Eine solche ID-Komponente mit optisch erfassbaren Informationen kann beispielsweise als eine elektronische Einrichtung mit einem Display zur Darstellung von Informationen ausgebildet und eingerichtet sein oder beispielsweise auch als ein Barcode-Tag oder ein QR-Code-Tag, welcher beispielsweise aufgeklebt oder in anderer Weise auf einem Gegenstand angebracht sein kann oder angebracht werden kann.

Die Heizbalg-ID-Komponente und die Heizbalg-ID-Information können dabei derart ausgebildet und eingerichtet sein, dass der elastische Heizbalg die Heizbalg-ID-Komponente umfasst, wobei die Heizbalg-ID-Komponente wiederum die Heizbalg-ID-Information zur eindeutigen Identifikation des elastischen Heizbalgs umfasst.

Eine ID-Information bezüglich einer Vorrichtung oder Komponente, z.B. die Heizbalg-ID-Information oder die Spannvorrichtungs-ID-Information, kann jede geeignete Information zur eindeutigen Identifizierung der Vorrichtung oder Komponente sein, z.B. zur eindeutigen Identifizierung des Heizbalgs bzw. der Einspannvorrichtung. Dies kann beispielsweise eine Seriennummer, eine Seriennummer inklusive einer Chargennummer, eine Bestellnummer, eine eindeutige Produktbeschreibung, ein Produktname mit einer zusätzlichen Kennnummer, und/oder eine vergleichbare Information sein oder eine solche Information umfassen. Eine ID-Information kann neben alphanumerischen Zeichen auch jede Art von Informationsdarstellung umfassen. Sie kann als alphanumerische Zeichenkette, als Barcode, als QR-Code, als Binärzahl, als Hexadezimalzahl, als Bild, als Grafik und/oder Vergleichbares ausgebildet und eingerichtet sein oder derartige Elemente umfassen.

Insbesondere kann die Spannvorrichtungs-Information eine Spannvorrichtungs-ID-Information zur eindeutigen Identifizierung der Einspannvorrichtung umfassen. Dabei kann die Spannvorrichtungs-ID-Information entsprechend einer ID-Information oder der Heizbalg-ID-Information gemäß der vorliegenden Beschreibung ausgebildet und eingerichtet sein. Eine Spannvorrichtungs-Information kann weiterhin beispielsweise eine Heizbalg-ID-Information bezüglich eines an der Einspannvorrichtung angebrachten Heizbalgs oder eines an der Einspannvorrichtung anzubringenden oder anbringbaren Heizbalgs umfassen. Weiterhin kann die Spannvorrichtungs-Information weitere Informationen bezüglich der Einspannvorrichtung oder einem an der Einspannvorrichtung angebrachten Heizbalg bzw. einem an der Einspannvorrichtung anbringbaren oder anzubringenden Heizbalg umfassen. Die Spannvorrichtungs-Information kann auch weiterhin eine ID-Information, z.B. eine Pressvorrichtungs-ID-Information, bezüglich einer Reifenheiz-Pressvorrichtung umfassen, an welcher die Heizbalg-Vorrichtung montiert oder montierbar ist. Auch hier kann die Spannvorrichtungs-Information weitere Informationen bezüglich einer solchen Reifenheiz-Pressvorrichtung umfassen.

Dass der Heizbalg eine Heizbalg-ID-Komponente umfasst, die eine Heizbalg-ID-Information zur eindeutigen Identifikation des Heizbalgs umfasst, kann derart ausgebildet und eingerichtet sein, dass der Heizbalg die Heizbalg-ID-Komponente mit der Heizbalg-ID-Information zumindest vor oder bei einer Montage oder einem Anbringen des Heizbalgs an der Einspannvorrichtung umfasst.

Der Heizbalg umfasst die Heizbalg-ID-Komponente zumindest so lange, bis entsprechende Vorkehrungen dafür getroffen sind, dass durch Erfassen der Spannvorrichtung-Information die Heizbalg-ID-Information ermittelbar ist. Dabei können solche Vorkehrungen beispielsweise sein, dass die Heizbalg-ID-Information der Spannvorrichtung-ID-Information z.B. in einer Datenbank zugeordnet ist oder wird, oder, dass die Heizbalg-ID-Information in der Spannvorrichtungs-ID-Komponente gespeichert ist oder wird.

Es kann dann weiterhin beispielsweise vorgesehen sein, dass, nachdem die vorstehend genannten Vorkehrungen dafür getroffen wurden, dass durch Erfassen der Spannvorrichtung-Information die Heizbalg-ID-Informationen ermittelbar sind, die Heizbalg-ID-Komponente vom Heizbalg entfernt wird. Weiterhin kann gegeben sein, dass im Rahmen eines Betriebs der Heizbalg-Vorrichtung innerhalb einer Reifenheiz-Pressvorrichtung zum Vulkanisieren von Fahrzeugreifen, die Heizbalg-ID-Komponente und/oder die Heizbalg-ID-Information derart geschädigt oder unbrauchbar gemacht wird, dass die Heizbalg-ID-Information dann nur noch erschwert oder gar nicht mehr lesbar oder erfassbar ist.

Weiterhin kann die Heizbalg-ID-Komponente derart ausgebildet und eingerichtet sein, und derart mit dem Heizbalg verbunden sein, dass die Heizbalg-ID-Information auch während eines Betriebs und/oder nach einem Betrieb des Heizbalgs in einer Reifenheiz-Pressvorrichtung noch in der Heizbalg-ID-Komponente derart gespeichert ist, dass sie noch erfassbar ist. Eine solche Erfassung kann beispielsweise durch einen Benutzer oder auch maschinell erfolgen, beispielsweise über entsprechende Funksignale, optisch oder auch Draht-gebunden.

Dass eine Information maschinell erfassbar ist, kann derart ausgebildet und eingerichtet sein, dass die Information an ein Empfangsgerät oder ein Empfangs-Bauelement übertragbar und von diesem erfassbar ist. Dabei können die Informationen beispielsweise optisch, drahtlos oder auch drahtgebunden an das Empfangsgerät oder Empfangs-Bauelement übertragen werden. Derartige Geräte oder Bauelemente zum maschinellen erfassen einer Information können beispielsweise als eine Kamera, einen optischen Empfänger, ein optischer Sensor, ein RFID-Reader, ein NFC-Empfangschip, ein WLAN-Chip, ein Mobilfunk-Chip oder auch als ein sonstiger elektrischer oder optischer Empfänger ausgebildet und eingerichtet sein.

In einer vorteilhaften Ausgestaltung kann eine maschinell erfassbare Information beispielsweise dauerhaft maschinell erfassbar ausgebildet und eingerichtet sein. Eine derart dauerhaft maschinell erfassbare Information kann beispielsweise über eine längere Zeit und auch über eine längere Benutzung einer entsprechenden Vorrichtung oder eines entsprechenden Gegenstands maschinell erfassbar sein. Im Zusammenhang mit dem Vulkanisieren von Reifen in einer Reifenheiz-Pressvorrichtung gemäß der vorliegenden Beschreibung an eine dauerhaft maschinell erfassbare Information beispielsweise derart ausgebildet und eingerichtet sein, dass die Information auch nach vielen Produktionszyklen der Reifenheiz-Pressvorrichtung, beispielsweise nach 10, 100, 1000 oder 10.000 Produktionszyklen, oder auch im Rahmen einer typischen Lebensdauer der Einspannvorrichtung, immer noch maschinell erfassbar ist.

In einer vorteilhaften Ausgestaltung kann eine maschinell erfassbare Information beispielsweise zumindest temporär maschinell erfassbar ausgebildet und eingerichtet sein. Eine zumindest temporär maschinell erfassbare Information kann dabei derart ausgebildet und eingerichtet sein, dass die Information zumindest zu bestimmten Zeitpunkten oder Zeiträumen maschinell erfassbar ist. Im Rahmen eines Vulkanisierens von Reifen in einer Reifenheiz-Pressvorrichtung gemäß der vorliegenden Beschreibung kann dann beispielsweise vorgesehen sein, dass eine Heizbalg-ID-Information, eine Spannvorrichtungs-Information und/oder eine Spannvorrichtungs-ID-Information derart temporär maschinell auslesbar ausgebildet und eingerichtet ist, dass eine solche Information während eines Beladens oder Entladens der Reifenheiz-Pressvorrichtung mit einem entsprechenden Reifen auslesbar ist und während eines aktiven Ablaufs eines Vulkanisiervorgangs eines Reifens nicht.

Dass durch Erfassen der Spannvorrichtung-Information die Heizbalg-ID-Information ermittelbar ist, bedeutet, dass es nach Erfassen der Spannvorrichtung-Information möglich ist, unter Verwendung der Spannvorrichtungs-Information eine Kenntnis der Heizbalg-ID-Information zu erhalten.

Dies kann beispielsweise derart ausgebildet und eingerichtet sein, dass die Spannvorrichtungs-Information die Heizbalg-ID-Information unmittelbar umfasst. Weiterhin kann dies beispielsweise derart ausgebildet und eingerichtet sein, dass über eine Datenbank oder eine entsprechende Liste unter Verwendung der Spannvorrichtungs-Information die Heizbalg-ID-Information ableitbar ist. Insbesondere kann vorgesehen sein, dass auf diese Weise die Heizbalg-ID-Information ableitbar ist, welche dem Heizbalg zugehörig ist, der beim Erfassen der Spannvorrichtungs-Information in der Heizbalg-Vorrichtung montiert war.

Dies kann beispielsweise derart realisiert sein, dass die Spannvorrichtungs-Information eine Spannvorrichtungs-ID-Information zur eindeutigen Identifikation der Einspannvorrichtung umfasst. Weiterhin kann vorgesehen sein, dass in einer Gerätedatenbank dieser Spannvorrichtungs-ID-Information die Heizbalg-ID-Information zugeordnet ist, insbesondere die des zum Zeitpunkt der Erfassung der Spannvorrichtungs-Information in der Einspannvorrichtung montierten Heizbalgs zugeordnet ist. Nach dem Erfassen der Spannvorrichtung-Information kann dann die darin enthaltene Spannvorrichtungs-ID-Information in die Gerätedatenbank eingegeben werden, worauf von dieser dann ein Verweis auf die Heizbalg-ID-Information erfolgt, die dann wiederum ausgegeben werden kann.

In einer vorteilhaften Ausgestaltung kann die Spannvorrichtungs-ID-Komponente derart ausgebildet, eingerichtet und derart an der Einspannvorrichtung angebracht sein,
und außerdem die Heizbalg-Vorrichtung derart zur Montage in der Reifenheiz-Pressvorrichtung vorgesehen, ausgebildet und eingerichtet sein,
dass die Spannvorrichtungs-Information bei in der Reifenheiz-Pressvorrichtung montierter Heizbalg-Vorrichtung maschinell erfassbar ist.

Dass die Heizbalg-Vorrichtung in der Reifenheiz-Pressvorrichtung montiert ist, kann derart ausgebildet und eingerichtet sein, dass die Heizbalg-Vorrichtung in einer für eine bestimmungsgemäße Verwendung innerhalb der Reifenheiz-Pressvorrichtung vorgesehene Art und Weise in der Reifenheiz-Pressvorrichtung montiert ist. Für die Heizbalg-Vorrichtung können mehrere verschiedene Möglichkeiten einer bestimmungsgemäßen Montage innerhalb der Reifenheiz-Pressvorrichtung vorgesehen sein.

Dass die Spannvorrichtungs-Information bei in der Reifenheiz-Pressvorrichtung montierter Heizbalg-Vorrichtung maschinell erfassbar ist, kann dabei gegeben sein, wenn die Spannvorrichtungs-Information maschinell erfassbar ist, wenn die Heizbalg-Vorrichtung entsprechend mindestens einer der Möglichkeiten zur bestimmungsgemäßen Montage in der Reifenheiz-Pressvorrichtung montiert ist.

Dass die Spannvorrichtung-Information bei in der Reifenheiz-Pressvorrichtung montierter Heizbalg-Vorrichtung maschinell erfassbar ist, kann derart ausgebildet und eingerichtet sein, dass es zumindest eine Möglichkeit gibt, bei in der Reifenheiz-Vorrichtung montierter Heizbalg-Vorrichtung die Spannvorrichtungs-Information maschinell zu erfassen. Dies kann beispielsweise derart ausgebildet und eingerichtet sein, dass es beispielsweise für eine drahtgebundene maschinelle Erfassung zumindest eine Möglichkeit, Position und/oder Lage der montierten Heizbalg-Vorrichtung innerhalb der Reifenheiz-Pressvorrichtung gibt, in welcher sich beispielsweise eine drahtgebundene Verbindung zu einem entsprechenden Empfangsgerät herstellen lässt. Erfolgt die maschinelle Erfassung beispielsweise über entsprechende Funksignale oder drahtlos-Kommunikation, so gibt es zumindest eine mögliche Position und Ausgestaltung eines entsprechenden Drahtlos-Empfängers, in welcher die Spannvorrichtungs-Information bei in der Reifenheiz-Pressvorrichtung montierter Heizbalg-Vorrichtung maschinell erfassbar ist. Erfolgt die maschinelle Erfassung beispielsweise optisch, so gibt es zumindest eine mögliche Position und Ausgestaltung einer entsprechenden Kamera oder eines entsprechenden optischen Sensors, in welcher die Spannvorrichtungs-Information bei in der Reifenheiz-Pressvorrichtung montierter Heizbalg-Vorrichtung maschinell erfassbar ist.

In einer vorteilhaften Ausgestaltung kann vorgesehen sein, dass die Spannvorrichtung-Information bei in der Reifenheiz-Pressvorrichtung montierter Heizbalg-Vorrichtung zumindest temporär maschinell erfassbar ist.

Dies kann beispielsweise derart ausgebildet und eingerichtet sein, dass zumindest während bestimmter Zeitpunkte oder Zeiträume eine maschinelle Erfassung der Spannvorrichtungs-Information bei in der Reifenheiz-Pressvorrichtung montierter Heizbalg-Vorrichtung möglich ist.

Im Rahmen eines Vulkanisierens von Reifen in einer Reifenheiz-Pressvorrichtung gemäß der vorliegenden Beschreibung kann dann beispielsweise vorgesehen sein, dass die Spannvorrichtungs-Information derart temporär maschinell auslesbar ausgebildet und eingerichtet ist, dass eine solche Information während eines Beladens oder Entladens der Reifenheiz-Pressvorrichtung mit einem entsprechenden Reifen auslesbar ist, und während eines aktiven Ablaufs eines Vulkanisiervorgangs eines Reifens nicht. Dies kann beispielsweise der Fall sein, wenn die Spannvorrichtungs-ID-Komponente während eines Vulkanisiervorgangs in der Reifenheiz Pressvorrichtung beispielsweise durch Komponenten oder Gegenstände, wie beispielsweise einer Reifen-Form, verdeckt sind, und daher beispielsweise für eine drahtgebundene Verbindung nicht zugänglich sind - oder auch bei drahtlosen Verbindungen eine Kommunikation durch die genannten Komponenten oder Gegenstände blockiert oder zumindest erschwert wird. Weiterhin kann dies auch der Fall sein, wenn beispielsweise durch hohe Temperaturen während eines Vulkanisieren-Vorgangs entsprechende Sende- und/oder Empfangskomponenten, wie beispielsweise die Spannvorrichtungs-ID-Komponente, nicht funktionsfähig sind oder eine reduzierte Funktionsfähigkeit aufweisen.

Weiterhin kann eine temporäre maschinelle Erfassbarkeit auch dann gegeben sein, wenn sich die Heizbalg-Vorrichtung beispielsweise in einem passiven Zustand gemäß der vorliegenden Beschreibung befindet, beispielsweise zum Be- oder Entladen eines Reifens in oder aus der Reifenheiz-Pressvorrichtung. Bei dieser Ausgestaltung kann beispielsweise vorgesehen sein, dass die Spannvorrichtung-Information nicht maschinell sinnvoll erfassbar ist, wenn die Heizbalg-Vorrichtung in einem aktiven Zustand gemäß der vorliegenden Beschreibung befindlich ist.

Weiterhin kann eine temporäre maschinelle Erfassbarkeit auch dann gegeben sein, wenn sich die Heizbalg-Vorrichtung beispielsweise in einem Aktiven Zustand gemäß der vorliegenden Beschreibung befindet, beispielsweise während dem Vulkanisieren eines Reifens in der Reifenheiz-Pressvorrichtung. Bei dieser Ausgestaltung kann beispielsweise vorgesehen sein, dass die Spannvorrichtung-Information nicht maschinell sinnvoll erfassbar ist, wenn die Heizbalg-Vorrichtung in einem passiven Zustand gemäß der vorliegenden Beschreibung befindlich ist.

Weiterhin kann die Heizbalg-Vorrichtung derart ausgebildet und eingerichtet sein, dass die Spannvorrichtungs-ID-Komponente als elektronische Komponente ausgebildet und eingerichtet ist,
und dass die Spannvorrichtungs-Information bei in der Reifenheiz-Pressvorrichtung montierter Heizbalg-Vorrichtung drahtlos maschinell erfassbar ist.

Unter einer elektronischen Komponente wird jede Komponente, Baugruppe oder auch jeder Chip oder jedes elektronische Bauelemente verstanden, welches zum elektrisch betriebenen Senden und/oder Empfangen und/oder Speichern von Daten ausgebildet und eingerichtet ist. In einer vorteilhaften Ausgestaltung kann eine elektronische Komponente gemäß der vorliegenden Beschreibung zum Speichern von Daten und zum Senden der gespeicherten Daten oder zum Darstellen der gespeicherten Daten auf einer elektronischen Anzeigeeinrichtung ausgebildet und eingerichtet sein. In einer weiteren vorteilhaften Ausgestaltung kann eine elektronische Komponente beispielsweise zum Empfangen von Daten, zum Speichern dieser Daten sowie zum Senden dieser gespeicherten Daten und gegebenenfalls weiterer gespeicherter Daten, z.B. über ein drahtloses Übertragungsverfahren, oder auch zur Darstellung der gespeicherten Daten und gegebenenfalls weiterer gespeicherter Daten auf einer elektronischen Anzeigeeinrichtung ausgebildet und eingerichtet sein.

Dass die Spannvorrichtung-Information drahtlos maschinell erfassbar ist, kann beispielsweise derart ausgebildet und eingerichtet sein, dass keine drahtgebundene Kommunikationsverbindung zwischen der Spannvorrichtungs-ID-Komponente und einem entsprechenden Empfänger für die Spannvorrichtungs-Information vorliegt. Derartige drahtlose Kommunikationsverfahren können beispielsweise über entsprechende Funksignale erfolgen. Weiterhin kann eine drahtlose Erfassbarkeit gegeben sein, wenn die Spannvorrichtungs-Information durch eine entsprechende Kamera oder einen optischen Empfänger optisch erfassbar ist.

In einer vorteilhaften Ausgestaltung kann die Spannvorrichtungs-ID-Komponente beispielsweise eine elektronische Speichereinrichtung umfassen in einer weiteren vorteilhaften Ausgestaltung kann die Spannvorrichtungs-ID-Komponente beispielsweise zur Speicherung der Heizbalg-ID-Information ausgebildet und eingerichtet sein. In einer weiterhin vorteilhaften Ausgestaltung kann die Spannvorrichtungs-ID-Komponente beispielsweise zum Empfang und zur Speicherung von drahtlos an die Spannvorrichtungs-ID-Komponente übermittelten Daten ausgebildet und eingerichtet sein.

Eine als elektronische Komponente ausgebildete Spannvorrichtungs-ID-Komponente kann beispielsweise als sogenannter RFID-Chip oder als sogenannter NFC-Chip und/oder einer vergleichbaren Komponente zum Betrieb in einem vergleichbaren Nahfeld-Funknetzwerk und eingerichtet sein. Weiterhin kann eine als elektronische Komponente ausgebildete Spannvorrichtungs-ID-Komponente auch zum Betrieb in einem WLAN-Netz, einem Mobilfunk-Netz und/oder einem vergleichbaren Funk-Netz ausgebildet und eingerichtet sein. Die Spannvorrichtungs-ID-Komponente kann beispielsweise auch als eine elektronische Komponente mit einer Anzeigeeinrichtung ausgebildet und eingerichtet sein, wobei beispielsweise entsprechende Darstellungen oder Anzeigen auf der Anzeigeneinrichtung optisch erfassbar sind, z. B. über eine Kamera, einen Barcode-Leser, einen QR-CodeLeser oder vergleichbare Komponenten.

Eine Heizbalg-Vorrichtung gemäß der vorliegenden Beschreibung kann weiterhin derart ausgebildet und eingerichtet sein, dass die Spannvorrichtungs-Information die Heizbalg-ID-Information umfasst.

Wenn die Spannvorrichtungs-Information die Heizbalg-ID-Information umfasst, führt dies zu einer vorteilhaften Ausgestaltung der Erfindung, da bei der Erfassung der Spannvorrichtung-Information die Heizbalg-ID-Information unmittelbar erfasst und registriert werden kann. Dies ist eine Möglichkeit, bei welcher durch Erfassen der Spannvorrichtung-Information die Heizbalg-ID-Information ermittelbar ist oder ermittelt wird.

Dabei kann vorgesehen sein, dass die in der Spannvorrichtungs-ID-Komponente gespeicherte Spannvorrichtungs-Information die Heizbalg-ID-Information enthält und bereits mit dieser Information an der Einspannvorrichtung montiert wird oder montiert ist. Weiterhin kann vorgesehen sein, dass die Spannvorrichtungs-ID-Komponente bereits derart erstellt wird, dass die Spannvorrichtungs-Information die Heizbalg-ID-Information umfasst.

Weiterhin kann vorgesehen sein, dass die Heizbalg-ID-Information an die Spannvorrichtungs-ID-Komponente übertragen und dort gespeichert wird. Dies kann beispielsweise im Rahmen eines Montagevorgangs des Heizbalgs an der Einspannvorrichtung geschehen. Die Heizbalg-ID-Komponente kann beispielsweise derart ausgebildet und eingerichtet sein, dass die darin gespeicherte Heizbalg-ID-Information maschinell erfassbar ist - insbesondere drahtlos maschinell erfassbar ist. Dann kann im Rahmen des oben genannten Montagevorgangs des Heizbalgs an der Einspannvorrichtung beispielsweise die in der Heizbalg-ID-Komponente gespeicherte Heizbalg-ID-Information maschinell erfasst, dann an die Spannvorrichtungs-ID-Komponente übertragen und in der Spannvorrichtungs-ID-Komponente im Rahmen der Spannvorrichtungs-Information gespeichert werden.

Dabei kann vorgesehen sein, dass die Spannvorrichtungs-ID-Komponente bereits an der Einspannvorrichtung montiert ist, bevor die Heizbalg-ID-Information in ihr im Rahmen der Spannvorrichtungs-Information gespeichert wird. Es kann weiterhin auch vorgesehen sein, dass die Spannvorrichtungs-ID-Komponente bereits an der Einspannvorrichtung montiert ist, bevor die Heizbalg-ID-Information an die Spannvorrichtungs-ID-Komponente übertragen und dann im Rahmen der Spannvorrichtungs-Information in ihr gespeichert wird.

In einer weiteren vorteilhaften Ausgestaltung kann vorgesehen sein, dass die Spannvorrichtungs-Information eine Nutzungsinformation bezüglich des Heizbalgs umfasst und/oder eine Zusatzinformation bezüglich des Heizbalgs umfasst.

Diese Ausgestaltung führt zu einer weiter verbesserten Identifikation eines Heizbalgs für eine Reifenheiz-Pressvorrichtung. Dadurch, dass die genannten Nutzungs- und/oder Zusatzinformationen bezüglich des Heizbalgs bereits durch Erfassen der in der Regel aus den in der vorliegenden Beschreibung genannten Gründen einfacher zugänglichen Spannvorrichtungs-Information erhalten werden kann, wird die Identifikation und Charakterisierung sowie der Umgang mit dem Heizbalg erleichtert und verbessert. Durch diese Ausgestaltung lässt sich der Heizbalg besser charakterisieren und auch besser bezüglich seiner Qualität und/oder Eignung zur Nutzung in der Reifenheiz-Pressvorrichtung bewerten.

In einer weiterhin vorteilhaften Ausgestaltung umfasst die Spannvorrichtungs-Information sowohl die Heizbalg-ID-Information als auch die Nutzungsinformation bezüglich des Heizbalgs und/oder die Zusatzinformation bezüglich des Heizbalgs.

Auf diese Weise sind sowohl die ID des Heizbalgs als auch entsprechende Nutzungs- und Zusatzinformation unmittelbar in der an der Einspannvorrichtung befindlichen Spannvorrichtungs-ID-Komponente im Rahmen der Spannvorrichtungs-Information gespeichert und maschinell erfassbar - insbesondere drahtlos maschinell erfassbar.

So sind beispielsweise bei einer montierten Heizbalgvorrichtung unmittelbar an der Einspannvorrichtung Informationen über eine ID und z.B. einen Zustand und/oder Eigenschaften eines an der Einspannvorrichtung montierten Heizbalgs zugänglich. Dies kann insbesondere dann besonders vorteilhaft sein, wenn eine entsprechende Heizbalg-ID-Komponente des Heizbalgs im an der Einspannvorrichtung montierten Zustand nicht, oder nur schwierig, zugänglich ist (z.B. schwierig zugänglich für eine maschinellen Erfassung der enthaltenen Daten). Weiterhin kann dies auch vorteilhaft sein, wenn die Heizbalg-ID-Komponente durch die Montage und/oder einen Betrieb in der Reifenheiz-Pressvorrichtung zumindest temporär beeinträchtigt, geschädigt oder unbrauchbar geworden ist.

Eine Nutzungsinformation bezüglich des Heizbalgs kann beispielsweise eine Nutzungsdauer des Heizbalgs, eine Zahl von bereits mit dem Heizbalg durchgeführten Reifen-Vulkanisieren-Zyklen, ein Montagedatum des Heizbalgs an einer bestimmten Einspannvorrichtung (gegebenenfalls zusammen mit einer ID-Information der Einspannvorrichtung), ein Montagedatum des Heizbalgs in einer bestimmten Reifenheiz-Pressvorrichtung (gegebenenfalls zusammen mit einer ID-Information der Reifenheiz-Pressvorrichtung), Daten betreffend Produktionsparametern bei der Nutzung des Heizbalgs (z.B. eine Historie der für die einzelnen Produktionsvorgänge jeweils verwendeten Temperaturen und Drücke und gegebenenfalls Medien, oder auch eine Gesamt-Temperatur - und/oder Druckbelastung des Heizbalgs durch die Nutzung), und/oder eine ähnliche Informationen sein oder umfassen.

Eine Zusatzinformation bezüglich des Heizbalgs kann beispielsweise ein Herstellungsdatum, ein Heizbalg-Typ, eine Chargennummer, eine Seriennummer, ein Markenname, ein Produktname, eine Materialinformation (Z. B. Eine Gummimischung, enthaltene Komponenten, Verwendungsinformationen, Recycling- und/oder Entsorgungsinformationen, Warn-Informationen), eine Lebensdauer- oder Haltbarkeits-Information, eine mögliche maximale Zahl von durchführbaren Vulkanisier-Zyklen, ein Fertigungs-Ort, ein Herstellername, oder eine ähnliche Information sein oder umfassen.

Weiterhin kann in einer vorteilhaften Ausgestaltung vorgesehen sein, dass die Spannvorrichtungs-Information eine Spannvorrichtungs-ID-Information zur eindeutigen Identifikation der Einspannvorrichtung umfasst,
und dass weiterhin eine Gerätedatenbank vorgesehen ist, in welcher die Heizbalg-ID-Information der Spannvorrichtungs-ID-Information zugeordnet ist.

Dabei kann die Spannvorrichtungs-ID-Information zur eindeutigen Identifikation der Einspannvorrichtung gemäß der vorliegenden Beschreibung ausgebildet und eingerichtet sein.

Diese Ausgestaltung ermöglicht eine weiterhin verbesserte einfachere Identifikation eines Heizbalgs einer Reifenheiz-Pressvorrichtung. Durch Verwendung einer Gerätedatenbank, die beispielsweise in der Reifenheiz-Pressvorrichtung, in einer Steuereinrichtung der Reifenheiz-Pressvorrichtung, auf einem externen Rechner oder einer externen Computereinrichtung gespeichert sein kann, ist die Heizbalg-ID-Information ermittelbar, ohne dass Rücksicht z.B. auf mechanische, funktionale oder sonstige Einschränkungen durch die verwendeten Geräte und Komponenten genommen werden muss. Oder auch ohne dass Rücksicht auf Einschränkungen durch die verwendeten Prozessparameter wie beispielsweise hohe Temperaturen oder Drücke genommen werden muss.

Die Gerätedatenbank kann als in einer Computer-Einrichtung, einem Server, einer Steuerungseinrichtung, einer SPS (Speicherprogrammierbare Steuerung), einem Edge-Device, einem PC, einem Computer-Netzwerk, einer Cloud oder in einer vergleichbaren Datenstruktur gespeicherte Datenbank ausgebildet und eingerichtet sein.

In der Gerätedatenbank können beispielsweise Daten bezüglich einer Heizbalg-Vorrichtung gemäß der vorliegenden Beschreibung, einer Reifenheiz-Pressvorrichtung gemäß der vorliegenden Beschreibung und/oder eines Reifenproduktionssystems gemäß der vorliegenden Beschreibung gespeichert sein.

Die Gerätedatenbank kann neben der Heizbalg-ID-Information und der Spannvorrichtungs-ID-Information auch noch weitere Informationen bezüglich dem Heizbalg, der Einspannvorrichtung und/oder einer oder mehrerer Reifenheiz-Pressvorrichtung umfassen. Solche weiteren Informationen können beispielsweise Nutzungsinformation oder Zusatzinformationen gemäß der vorliegenden Beschreibung sein. Solche Nutzung- und/oder Zusatzinformationen können beispielsweise bezüglich des Heizbalgs, bezüglich der Einspannvorrichtung, bezüglich der Heizbalg-Vorrichtung und/oder bezüglich einer oder mehrerer Reifenheiz-Pressvorrichtungen vorliegen und/oder gespeichert sein. Die jeweiligen Nutzung- und/oder Zusatzinformationen können dann beispielsweise einer jeweiligen Heizbalg-ID-Information, Spannvorrichtungs-ID-Information und/oder einer ID-Information bezüglich einer oder mehrerer Reifenheiz-Pressvorrichtung an in der Gerätedatenbank zugeordnet sein.

Die Gerätedatenbank kann z.B. auch jeweils diesen Vorrichtungen bzw. Systemen zugeordnet sein. Dabei kann die Gerätedatenbank beispielsweise in einer Steuerungseinrichtung gespeichert sein, welche der jeweiligen Vorrichtung zugeordnet ist.

Weiterhin kann die Gerätedatenbank auch in einer Recheneinrichtung, beispielsweise einem Computer, einem EDGE Device oder einer Cloud, gespeichert sein, wobei die genannten Einrichtungen dann jeweils der jeweiligen Vorrichtung zugeordnet sind oder sein können.

Das Abspeichern von Informationen oder Daten in der Gerätedatenbank, z.B. einer ID-Information gemäß der vorliegenden Beschreibung, kann beispielsweise in einem SQL-Format oder auch NoSQL-Format erfolgen. Die Gerätedatenbank kann auch z.B. als eine relationale Datenbank oder auch eine nicht-relationale Datenbank ausgebildet und eingerichtet sein.

Weiterhin kann die Gerätedatenbank auch als eine semantische Datenbank ausgebildet und eingerichtet sein. Dabei kann die semantische Datenbank beispielsweise in einem sogenannten NoSQL-Datenbankformate oder auch dem sogenannten Knowledge-Graph-Datenformat vorliegen.

Dass ein erstes und ein zweites Datenelement in einer Datenbank einander zugeordnet sind, kann derart ausgebildet und eingerichtet sein, dass nach Eingabe des ersten Datenelements von der Datenbank ein Verweis auf das zweite Datenelement durchführbar ist oder erfolgt. Dass ein erstes und ein zweites Datenelement in einer Datenbank einander zugeordnet sind kann weiterhin auch derart ausgebildet und eingerichtet sein, dass nach Eingabe des zweiten Datenelements von der Datenbank ein Verweis auf das erste Datenelement durchführbar ist oder erfolgt. Dass ein erstes und ein zweites Datenelement in einer Datenbank einander zugeordnet sind, kann derart ausgebildet und eingerichtet sein, dass nach Eingabe eines ersten der Datenelemente von der Datenbank ein Verweis auf das zweite der Datenelemente durchführbar ist.

Dass ein erstes Datenelement einem zweiten Datenelement in einer Datenbank zugeordnet ist, kann derart ausgebildet und eingerichtet sein, dass nach Eingabe des zweiten Datenelements von der Datenbank ein Verweis auf das erste Datenelement durchführbar ist. Dass ein erstes Datenelement einem zweiten Datenelement in einer Datenbank zugeordnet ist, kann weiterhin auch derart ausgebildet und eingerichtet sein, dass nach Eingabe des ersten Datenelements von der Datenbank ein Verweis auf das zweite Datenelement durchführbar ist.

Dass die Heizbalg-ID-Information der Spannvorrichtungs-ID-Information zugeordnet ist, kann in einer vorteilhaften Ausgestaltung derart ausgebildet und eingerichtet sein, dass nach Eingabe der Spannvorrichtungs-ID-Information vermittels der Datenbank ein Verweis auf die Heizbalg-ID-Information erfolgt oder durchführbar ist.

Die Zuordnung von Daten zueinander im Rahmen der vorliegenden Beschreibung - beispielsweise innerhalb einer Datenbank - kann als eine mittelbare oder unmittelbare Zuordnung ausgebildet und eingerichtet sein. Dabei wird unter einer unmittelbaren Zuordnung zweier Datenelemente verstanden, dass z.B. in einer Datenbank ein unmittelbarer Verweis von dem einem auf das andere Datenelement (und ggf. auch umgekehrt) besteht. Unter einer mittelbaren Zuordnung zweier Datenelemente wird verstanden, dass von einem der Datenelemente erst auf ein oder mehrere weitere Datenelemente verwiesen wird, und erst von diesen auf das andere der Datenelemente.

Dass ein erstes Datenelement in einer Datenbank einem zweiten Datenelement zugeordnet ist, kann derart ausgebildet und eingerichtet sein, dass das erste und/oder das zweite Datenelement auch jeweils einem oder mehreren weiteren Datenelementen zugeordnet ist.

Nach Eingabe der Spannvorrichtungs-ID-Information und/oder Ermittlung der Heizbalg-ID-Information können weiterhin gegebenenfalls entsprechend in der Gerätedatenbank gespeicherte und den jeweiligen ID-Informationen zugeordnete Zusatz- und/oder Nutzungsinformation gemäß der vorliegenden Beschreibung ermittelt und/oder ausgegeben werden.

Die vorstehend genannte Aufgabe wird ebenfalls gelöst durch eine Reifenheiz-Pressvorrichtung zum Vulkanisieren eines Fahrzeugreifens, wobei die Reifenheiz-Pressvorrichtung eine Heizbalg-Vorrichtung gemäß der vorliegenden Beschreibung umfasst.

Dadurch, dass die Reifenheiz-Pressvorrichtung eine Heizbalg-Vorrichtung gemäß der vorliegenden Beschreibung umfasst, ermöglicht auch eine solche Reifenheiz-Pressvorrichtung aus den in der vorliegenden Beschreibung genannten Gründen eine verbesserte, einfachere/oder zuverlässigere Identifikation eines in der Reifenheiz-Pressvorrichtung genutzten Heizbalgs.

Dabei kann weiterhin vorgesehen sein, dass die Spannvorrichtungs-Information eine Spannvorrichtungs-ID-Information zur eindeutigen Identifikation der Einspannvorrichtung umfasst und eine Gerätedatenbank vorgesehen ist, in welcher die Heizbalg-ID-Information der Spannvorrichtungs-ID-Information zugeordnet ist,
und wobei weiterhin vorgesehen ist, dass der Reifenheiz-Pressvorrichtung eine Pressvorrichtungs-ID-Information zugeordnet ist, und dass in der Gerätedatenbank die Pressvorrichtungs-ID-Information der Spannvorrichtungs-ID-Information und/oder der Heizbalg-ID-Information zugeordnet ist.

Die Heizbalg-Vorrichtung ist dabei insbesondere derart ausgebildet und eingerichtet, dass die Spannvorrichtungs-Information eine Spannvorrichtungs-ID-Information zur eindeutigen Identifikation der Einspannvorrichtung umfasst, und dass weiterhin eine Gerätedatenbank vorgesehen ist, in welcher die Heizbalg-ID-Information der Spannvorrichtungs-ID-Information zugeordnet ist.

Die Pressvorrichtungs-ID-Information kann dabei zur eindeutigen Identifikation der Reifenheiz-Pressvorrichtung ausgebildet und eingerichtet sein. Dabei kann die Pressvorrichtungs-ID-Information als eine ID-Information gemäß der vorliegenden Beschreibung ausgebildet und eingerichtet sein. Insbesondere kann die Pressvorrichtungs-ID-Information analog zu einer Heizbalg-ID-Information gemäß der vorliegenden Beschreibung und/oder analog zu einer Spannvorrichtungs-ID-Information gemäß der vorliegenden Beschreibung ausgebildet und eingerichtet sein.

Die Gerätedatenbank kann dabei weiterhin derart ausgebildet und eingerichtet sein, dass beispielsweise durch Eingabe der Pressvorrichtungs-ID-Information die Spannvorrichtungs-ID-Information und/oder die Heizbalg-ID-Information der in der Reifenheiz-Pressvorrichtung verwendeten Einspannvorrichtung bzw. des in der Reifenheiz-Pressvorrichtung verwendeten Heizbalgs ermittelbar ist oder ermittelt wird. Weiterhin kann die Gerätedatenbank auch derart ausgebildet und eingerichtet sein, dass beispielsweise durch Eingabe der Heizbalg-ID-Information und/oder der Spannvorrichtungs-ID-Information die Pressvorrichtungs-ID-Information der Reifenheiz-Pressvorrichtung ermittelbar ist, in welcher sich der entsprechende Heizbalg bzw. die entsprechende Einspannvorrichtung aktuell befindet.

Weiterhin kann die Gerätedatenbank auch Nutzungsinformationen und/oder Zusatzinformationen bezüglich der Reifenheiz-Pressvorrichtung umfassen, die weiterhin jeweils der Pressvorrichtungs-ID-Information in der Gerätedatenbank zugeordnet sein können.

Die vorstehend genannte Aufgabe wir ebenfalls gelöst von einem Reifenproduktionssystem, umfassend eine Reifenheiz-Pressvorrichtung gemäß der vorliegenden Beschreibung, sowie eine Gerätedatenbank gemäß der vorliegenden Beschreibung.

Dadurch, dass das Reifenproduktionssystem eine Reifenheiz-Pressvorrichtung und eine Gerätedatenbank gemäß der vorliegenden Beschreibung umfasst, ermöglicht auch ein solches Reifenproduktionssystem aus den in der vorliegenden Beschreibung genannten Gründen eine verbesserte, einfachere und/oder zuverlässigere Identifikation eines im Reifenproduktionssystem genutzten Heizbalgs.

Dabei kann weiterhin eine Produktionsdatenbank vorgesehen sein, wobei nach dem Vulkanisieren eines zu vulkanisierenden Fahrzeugreifens (eines sogenannten "Reifen-Rohlings") durch die Reifenheiz-Pressvorrichtung in der Produktionsdatenbank die Heizbalg-ID-Information einer Reifen-ID-Information des Fahrzeugreifens bzw. Reifen-Rohlings zugeordnet ist.

Dabei können die Reifenheiz-Pressvorrichtung und die Heizbalg-ID-Information gemäß der vorliegenden Beschreibung ausgebildet und eingerichtet sein.

Die Reifen-ID-Information kann beispielsweise als eine ID-Information gemäß der vorliegenden Beschreibung ausgebildet und eingerichtet sein. Sie kann beispielsweise analog einer Heizbalg-ID-Information, einer Spannvorrichtung-ID-Information und/oder einer Pressvorrichtungs-ID-Information ausgebildet und eingerichtet sein.

Dabei wird der Begriff Fahrzeugreifen im Rahmen der vorliegenden Beschreibung für jede Ausprägung des Fahrzeugreifen in jedem seiner Produktionsschritte von einem ersten Ausgangsprodukt oder Reifen-Rohling bis zum fertig verkaufbaren Endprodukt verwendet. Unter einem Fahrzeugreifen wird also insbesondere ein Reifen-Rohling, ein zu vulkanisierender Fahrzeugreifen und auch ein vulkanisierter Fahrzeugreifen verstanden.

Insbesondere kann vorgesehen sein, dass der zu vulkanisierende Fahrzeugreifen (der sogenannte "Reifen-Rohling") eine Reifen-ID-Komponente umfasst, welche wiederum die Reifen-ID-Information umfasst. Weiterhin kann vorgesehen sein, dass die Reifen-ID-Information der Reifen-ID-Komponente maschinell erfassbar ist. Dabei kann die Reifen-ID-Komponente entsprechend einer ID-Komponente gemäß der vorliegenden Beschreibung ausgebildet und eingerichtet sein. Die Reifen-ID-Komponente kann z.B. entsprechend einer Spannvorrichtungs-ID-Komponente und/oder einer Heizbalg-ID-Komponente ausgebildet und eingerichtet sein. Die maschinelle Erfassbarkeit der Reifen-ID-Information kann ebenfalls gemäß der vorliegenden Beschreibung ausgebildet und eingerichtet sein.

Die Produktionsdatenbank kann dabei als eine Datenbank gemäß der vorliegenden Beschreibung ausgebildet und eingerichtet sein. Insbesondere kann die Produktionsdatenbank ausgebildet und eingerichtet sein, um Produktionsvorgänge von Reifenheiz-Pressvorrichtungen zu erfassen und/oder zu protokollieren.

Insbesondere kann die Produktionsdatenbank der Reifenheiz-Pressvorrichtung zugeordnet sein und Produktionsvorgänge der Reifenheiz-Pressvorrichtung erfassen und/oder protokollieren.

Dabei kann die Produktionsdatenbank beispielsweise derart ausgebildet und eingerichtet sein, dass jedem vermittels der Reifenheiz-Pressvorrichtung vulkanisierten Fahrzeugreifen ein Datensatz zugeordnet ist. Dieser Datensatz kann beispielsweise die Reifen-ID-Information des jeweils zu produzierenden, in Produktion befindlichen und/oder produzierten Fahrzeugreifens, sowie die Heizbalg-ID-Information des im Rahmen des Vulkanisierens des Fahrzeugreifens verwendeten Heizbalgs umfassen. Weiterhin kann dieser Datensatz entsprechende ID-Informationen bezüglich weiterer Komponenten der Reifenheiz-Pressvorrichtung umfassen, die im Rahmen des Vulkanisierens des Fahrzeugreifens in der Reifenheiz-Pressvorrichtung vorhanden waren oder verwendet wurden.

Der Datensatz kann weiterhin auch eine Pressvorrichtungs-ID-Information gemäß der vorliegenden Beschreibung bezüglich der verwendeten Reifenheiz-Pressvorrichtung umfassen. Beispielsweise kann in der Produktionsdatenbank für den Vulkanisier-Vorgang eines bestimmten Fahrzeugreifens ein gesonderter Eintrag vorgenommen werden, wobei diesem Eintrag dann z.B. eine Reifen-ID-Information des bearbeiteten Fahrzeugreifens, eine Pressvorrichtungs-ID-Information der verwendeten Reifenheiz-Pressvorrichtung, eine Spannvorrichtungs-ID-Information der im Rahmen des Vulkanisiervorgangs verwendeten Einspannvorrichtung oder Heizbalg-Vorrichtung, eine Heizbalg-ID-Information des im Rahmen des Vulkanisiervorgangs verwendeten Heizbalgs und/oder ein Zeitpunkt oder eine laufende Nummer des Vulkanisiervorgangs zugeordnet sein kann.

Weiterhin kann einem Datensatz in der Produktionsdatenbank, der die Reifen-ID-Information und die zugeordnete Heizbalg-ID-Information umfasst, auch ein Produktionszeitpunkt und/oder eine laufende Produktions-Nummer umfassen. Dabei kann z.B. jede der genannten Informationen als ein Sortier- oder Suchkriterium in der Produktionsdatenbank verwendet werden.

Weiterhin kann ein solcher, einem Fahrzeugreifen zugewiesener Datensatz der Produktionsdatenbank, neben der Heizbalg-ID-Information und den genannten Informationen, auch weitere, im Rahmen des Vulkanisierens des Fahrzeugreifens verwendete Produktionsparameter, wie beispielsweise eine Produktionszeit, eine Produktionsdauer, ein Produktionszeitpunkt, ein angewendeter Temperatur- und/oder Druckverlauf, eine verwendete Maximaltemperatur, ein Energieverbrauch des Vulkanisierens, eine im Rahmen des Vulkanisierens angefallener CO2-Verbrauch oder vergleichbare Informationen, die dem Vulkanisiervorgang des Fahrzeugreifens zugeordnet oder zuordenbar sind, umfassen.

In der Produktionsdatenbank kann beispielsweise die Heizbalg-ID-Information des beim Vulkanisieren des Fahrzeugreifens verendeten Heizbalgs unmittelbar der Reifen-ID-Information des Fahrzeugreifens zugeordnet sein. In der Produktionsdatenbank kann auch die Reifen-ID-Information des Fahrzeugreifens mittelbar der Heizbalg-ID-Information des beim Vulkanisieren des Fahrzeugreifens verendeten Heizbalgs zugeordnet sein.

Weiterhin kann in der Produktionsdatenbank auch die Reifen-ID-Information des Fahrzeugreifens einer Pressvorrichtungs-ID-Information der beim Vulkanisieren des Fahrzeugreifens verwendeten Reifenheiz-Pressvorrichtung zugeordnet sein und dann der Pressvorrichtungs-ID-Information wiederum die Heizbalg-ID-Information des beim Vulkanisieren des Fahrzeugreifens verwendeten Heizbalgs zugeordnet sein.

Die vorstehend genannte Aufgabe wird weiterhin gelöst durch ein Verfahren zur Montage einer Heizbalg-Vorrichtung gemäß der vorliegenden Beschreibung, wobei das Verfahren die nachfolgend genannten Schritte umfasst:
- Erfassen der Heizbalg-ID-Information,
- Speichern der Heizbalg-ID-Information derart, dass durch Erfassen der Spannvorrichtungs-Information die Heizbalg-ID-Information ermittelbar ist,
- montieren der Heizbalg-Vorrichtung durch Anbringen des elastischen Heizbalgs an der Einspannvorrichtung.

Dabei können die vorstehend genannten Verfahrensschritte auch in einer anderen als der vorstehend genannten Reihenfolge ausgeführt werden. Lediglich das Speichern der Heizbalg-ID-Information erfolgt irgendwann nach dem Erfassen der Heizbalg-ID-Information, wobei zwischen dem Erfassen und dem Speichern der Heizbalg-ID-Information gegebenenfalls auch noch weitere Verfahrensschritte liegen können.

Mit dem genannten Verfahren wird bei der Montage einer Heizbalg-Vorrichtung die Heizbalg-ID-Information des dabei verwendeten Heizbalgs derart gesichert, dass sie auch dann ermittelbar ist, wenn sie beim weiteren Gebrauch des Heizbalgs bzw. der Heizbalg-Vorrichtung nicht mehr unmittelbar aus der Heizbalg-ID-Komponente maschinell erfassbar ist bzw. sein wird. Dies ermöglicht eine verbesserte, einfachere und/oder zuverlässigere Identifikation eines beim Vulkanisieren von Fahrzeugreifen verwendeten Heizbalgs.

Die Heizbalg-Vorrichtung, die Heizbalg-ID-Information, das Erfassen der Heizbalg-ID Information, die Spannvorrichtungs-Information, der Heizbalg, die Einspannvorrichtung, sowie die Montage des Heizbalgs mit der Einspannvorrichtung zur Heizbalg-Vorrichtung können dabei gemäß der vorliegenden Beschreibung ausgebildet und eingerichtet sein.

Dadurch, dass die Speicherung der Heizbalg-ID-Information derart erfolgt, dass durch Erfassen der Spannvorrichtung-Information die Heizbalg-ID-Information ermittelbar ist, ist es möglich, den beispielsweise beim Vulkanisieren eines Fahrzeugreifens verwendeten Heizbalg zu identifizieren, ohne unmittelbar dessen Heizbalg-ID-Komponente auslesen zu müssen. Dies führt zu einer besseren, einfacheren und/oder zuverlässigeren Identifikationsmöglichkeiten des beim Vulkanisiervorgang eines Fahrzeugreifens verwendeten Heizbalgs.

Dabei kann das Speichern der Heizbalg-ID-Informationen derart ausgebildet und eingerichtet sein, dass durch Erfassen der Spannvorrichtung-Information die Heizbalg-ID-Information ermittelbar ist, auch wenn nachfolgend der Speicherung der Heizbalg-ID-Information die Heizbalg-ID-Komponente, welche die Heizbalg-ID-Information umfasst, nur noch eine eingeschränkte Funktionalität aufweist oder unbrauchbar wird. Eine solche Unbrauchbarkeit kann beispielsweise derart ausgebildet und eingerichtet sein, dass die ursprünglich gespeicherte Heizbalg-ID-Information zerstört ist und/oder diese nicht mehr maschinell erfassbar ist.

Das vorstehend beschriebene Verfahren kann weiterhin derart ausgebildet und eingerichtet sein, dass das Speichern der Heizbalg-ID-Information in der Spannvorrichtungs-ID-Komponente erfolgt.

Die Heizbalg-ID-Information kann beispielsweise derart in der Spannvorrichtungs-ID-Komponente abgespeichert werden, dass die Spannvorrichtungs-Information die Heizbalg-ID-Information umfasst.

Dabei kann die Spannvorrichtungs-ID-Komponente sowie das Speichern der Heizbalg-ID-Information in der Spannvorrichtungs-ID-Komponente gemäß der vorliegenden Beschreibung ausgebildet und eingerichtet sein.

Die vorstehend genannte Aufgabe wird auch gelöst durch ein Verfahren zur Montage einer Heizbalg-Vorrichtung gemäß der vorliegenden Beschreibung, wobei das Verfahren die nachfolgend genannten Schritte umfasst:
- Erfassen der Heizbalg-ID-Information,
- Speichern der Heizbalg-ID-Information in der Spannvorrichtungs-ID-Komponente,
- montieren der Heizbalg-Vorrichtung durch Anbringen des elastischen Heizbalgs an der Einspannvorrichtung.

Dabei können die genannten Verfahrensschritte auch in einer anderen als der vorstehend genannten Reihenfolge ausgeführt werden. Lediglich das Speichern der Heizbalg-ID-Information erfolgt irgendwann nach dem Erfassen der Heizbalg-ID-Information, wobei zwischen dem Erfassen und dem Speichern der Heizbalg-ID-Information gegebenenfalls auch noch weitere Verfahrensschritte liegen können.

Auch hier kann Heizbalg-ID-Information beispielsweise derart in der Spannvorrichtungs-ID-Komponente abgespeichert werden, dass die Spannvorrichtungs-Information die Heizbalg-ID-Information umfasst.

Ein Verfahren gemäß der vorliegenden Beschreibung kann weiterhin derart ausgebildet und eingerichtet sein,
dass die Spannvorrichtungs-Information eine Spannvorrichtungs-ID-Information zur eindeutigen Identifikation der Einspannvorrichtung umfasst,
dass weiterhin eine Gerätedatenbank vorgesehen ist, in welcher die Heizbalg-ID-Information der Spannvorrichtungs-ID-Information zugeordnet ist,
dass neben der Heizbalg-ID-Information auch die Spannvorrichtungs-ID-Information erfasst wird,
und dass die Spannvorrichtungs-ID-Information und die Heizbalg-ID-Information in der Gerätedatenbank derart gespeichert werden, dass die Heizbalg-ID-Information der Spannvorrichtungs-ID-Information zugeordnet ist.

Dabei können die genannten Verfahrensschritte auch in einer anderen als der vorstehend genannten Reihenfolge ausgeführt werden. Lediglich das Speichern der Heizbalg-ID-Information und der Spannvorrichtungs-ID-Information erfolgt irgendwann nach dem Erfassen der Heizbalg- und Spannvorrichtungs-ID-Information, wobei zwischen dem Erfassen und dem Speichern der Heizbalg- und Spannvorrichtungs-ID-Information gegebenenfalls auch noch weitere Verfahrensschritte liegen können.

Dabei kann die Spannvorrichtungs-ID-Information, die Gerätedatenbank sowie die Zuordnung der Heizbalg-ID-Information zur Spannvorrichtungs-ID-Information gemäß der vorliegenden Beschreibung ausgebildet und eingerichtet sein.

Die vorstehend genannte Aufgabe wird auch gelöst durch ein Verfahren zur Montage einer Heizbalg-Vorrichtung gemäß der vorliegenden Beschreibung, bei welcher die Spannvorrichtungs-Information eine Spannvorrichtungs-ID-Information zur eindeutigen Identifikation der Einspannvorrichtung umfasst,
und wobei das Verfahren die nachfolgend genannten Schritte umfasst:
- Erfassen der Heizbalg-ID-Information und der Spannvorrichtungs-ID-Information,
- Speichern der Spannvorrichtungs-ID-Information und der Heizbalg-ID-Information in einer Gerätedatenbank derart, dass die Heizbalg-ID-Information der Spannvorrichtungs-ID-Information zugeordnet ist,
- montieren der Heizbalg-Vorrichtung durch Anbringen des elastischen Heizbalgs an der Einspannvorrichtung.

Auch hier können die genannten Verfahrensschritte auch in einer anderen als der vorstehend genannten Reihenfolge ausgeführt werden. Lediglich das Speichern der Heizbalg-ID-Information und der Spannvorrichtungs-ID-Information erfolgt irgendwann nach dem Erfassen der Heizbalg- und Spannvorrichtungs-ID-Information, wobei zwischen dem Erfassen und dem Speichern der Heizbalg- und Spannvorrichtungs-ID-Information gegebenenfalls auch noch weitere Verfahrensschritte liegen können.

Die vorstehend genannte Aufgabe wird weiterhin gelöst durch ein Verfahren zum Vulkanisieren eines Fahrzeugreifens mit einer Reifenheiz-Pressvorrichtung gemäß der vorliegenden Beschreibung, wobei das Verfahren die nachfolgend genannten Verfahrensschritte umfasst:
- Einbringen eines zu vulkanisierenden Fahrzeugreifens in die Reifenheiz-Pressvorrichtung, wobei dem Fahrzeugreifen eine Reifen-ID-Information zugeordnet ist,
- Vulkanisieren des zu vulkanisierenden Fahrzeugreifens,
- Entnehmen des vulkanisierten Fahrzeugreifens,
   wobei im Rahmen des vorstehend dargestellten VulkanisierVorgangs die nachfolgend genannten weiteren Verfahrensschritte ausgeführt werden:
- Erfassen der Spannvorrichtungs-Information der Heizbalg-Vorrichtung mit einer Erfassungseinrichtung,
- Speichern der Spannvorrichtungs-Information und der Reifen-ID-Information in einer Produktionsdatenbank derart, dass die Heizbalg-ID-Information der Reifen-ID-Information zugeordnet ist.

Dadurch, dass im vorstehend genannten Verfahren Spannvorrichtungs-Information und die Reifen-ID-Information in der Produktionsdatenbank in einer Weise abgespeichert sind, dass die Heizbalg-ID-Information der Reifen-ID-Information zugeordnet ist, ergibt sich ein verbessertes, einfacheres und/oder zuverlässigeres Verfahren zur Identifikation eines Heizbalgs. Dadurch, dass die Reifenheiz-Pressvorrichtung derart ausgebildet und eingerichtet ist, dass durch Erfassen der Spannvorrichtung-Information die Heizbalg-ID-Information ermittelbar ist, wird es möglich, auf vereinfachte und/oder zuverlässigere Weise die Heizbalg-ID-Information der Reifen-ID-Information zuzuordnen.

Dabei wird ein zu vulkanisierender Fahrzeuggreifen in der vorliegenden Beschreibung u.a. auch als sogenannter "Reifen-Rohling" bezeichnet. Ein solcher zu vulkanisierender Fahrzeuggreifen, oder Reifen-Rohling, kann beispielsweise gemäß der vorliegenden Beschreibung ausgebildet und eingerichtet sein.

Weiterhin kann die Reifenheiz-Pressvorrichtung, der Fahrzeuggreifen, die Reifen-ID-Information, der Vulkanisier-Vorgang, die Spannvorrichtungs-Information, die Heizbalg-Vorrichtung, die Spannvorrichtungs-Information sowie die Produktionsdatenbank gemäß der vorliegenden Beschreibung ausgebildet und eingerichtet sein.

Die Erfassungseinrichtung zur Erfassung der Spannvorrichtung-Information kann ebenfalls als Erfassungseinrichtung gemäß der vorliegenden Beschreibung ausgebildet und eingerichtet sein. Insbesondere kann die Erfassungseinrichtung jede Vorrichtung sein, welche zur Erfassung von ID-Informationen gemäß der vorliegenden Beschreibung ausgebildet und eingerichtet ist. Insbesondere kann die Erfassungseinrichtung auch zur drahtlosen Erfassung von ID-Informationen gemäß der vorliegenden Beschreibung ausgebildet und eingerichtet sein. Erfassungseinrichtung in diesem Sinne können beispielsweise eine Kamera, ein optischer Sensor, ein RFID-Sensor, ein Funk-Sensor, ein WLAN-Sensor ein Mobilfunk-Sensor ein NFC-Sensor oder vergleichbare Einrichtungen oder Sensoren sein.

Die vorstehend genannte Aufgabe wird auch gelöst durch ein computerlesbares Speichermedium, umfassend eine Produktionsdatenbank der vorliegenden Beschreibung für eine Reifenheiz-Pressvorrichtung gemäß der vorliegenden Beschreibung, wobei in der Produktionsdatenbank die Heizbalg-ID-Information der Reifen-ID-Information zugeordnet ist.

Dass die Produktionsdatenbank für eine Reifenheiz-Pressvorrichtung vorgesehen ist, kann derart ausgebildet und eingerichtet sein, dass die Produktionsdatenbank unmittelbar der Reifenheiz-Pressvorrichtung zugeordnet ist und insbesondere Produktionsdaten der Reifenheiz-Pressvorrichtung umfasst. Weiterhin kann die Produktionsdatenbank neben der Reifenheiz-Pressvorrichtung auch noch zur Nutzung mit anderen Produktionsvorrichtungen, beispielsweise anderen Reifenheiz-Pressvorrichtungen vorgesehen, ausgebildet und eingerichtet sein. Beispielsweise kann eine Produktionsdatenbank für eine komplette Produktion eines entsprechenden Produzenten umfassend alle Produktionsvorrichtungen des Produzenten ausgebildet und eingerichtet sein.

Die Produktionsdatenbank, die Reifenheiz-Pressvorrichtung, die Heizbalg-ID-Information, die Reifen-ID-Information sowie die Zuordnung der Heizbalg-ID-Information zur Reifen ID-Information können dabei gemäß der vorliegenden Beschreibung ausgebildet und eingerichtet sein.

In einer vorteilhaften Ausgestaltung können der Reifen-ID-Information beispielsweise eine Kennung für einen Produktionszeitpunkt, eine Kennung für einen Vulkanisier-Zeitpunkt, eine ID-Information für die Reifenheiz-Pressvorrichtung (beispielsweise die Pressvorrichtungs-ID-Information), die Spannvorrichtungs-ID-Information und/oder weitere Produktions-Parameter oder Sensorwerte zugeordnet sein, die im Rahmen der Herstellung des Fahrzeugreifens mit der Reifen-ID-Information angefallen sind oder anfallen.

Die vorstehend genannte Aufgabe wird auch gelöst durch ein computerlesbares Speichermedium, umfassend eine Gerätedatenbank gemäß der vorliegenden Beschreibung für eine Heizbalg-Vorrichtung gemäß der vorliegenden Beschreibung oder eine Reifenheiz-Pressvorrichtung gemäß der vorliegenden Beschreibung, wobei in der Gerätedatenbank die Heizbalg-ID-Information der Spannvorrichtungs-ID-Information zugeordnet ist.

Dabei kann die Gerätedatenbank, die Heizbalg-Vorrichtung, die Reifenheiz-Pressvorrichtung, die Heizbalg-ID-Information sowie die Spannvorrichtungs-ID-Information und die Zuordnung der Heizbalg-ID-Information zur Spannvorrichtungs-ID-Information gemäß der vorliegenden Beschreibung ausgebildet und eingerichtet sein.

Dass die Gerätedatenbank für eine Heizbalg-Vorrichtung vorgesehen ist, kann derart ausgebildet und eingerichtet sein, dass die Gerätedatenbank unmittelbar der Heizbalg-Vorrichtung zugeordnet ist und insbesondere Gerätedaten bezüglich der Heizbalg-Vorrichtung umfasst. Weiterhin kann die Gerätedatenbank neben der Reifenheiz-Pressvorrichtung auch noch zur Nutzung mit anderen Produktionskomponenten, beispielsweise mit anderen Heizbalg-Vorrichtungen vorgesehen, ausgebildet und eingerichtet sein. Beispielsweise kann eine Gerätedatenbank der Heizbalg-Vorrichtung, der Reifenheiz-Pressvorrichtung und/oder einer Produktionsanlage umfassend die Reifenheiz-Pressvorrichtung zugeordnet sein bzw. für das Zusammenwirken mit diesen ausgebildet und eingerichtet sein.

In einer vorteilhaften Ausgestaltung sind in der Gerätedatenbank der Heizbalg-Vorrichtung und/oder der Spannvorrichtungs-ID-Information und/oder der Heizbalg-ID-Information beispielsweise eine Kennung für einen Montagezeitpunkt der Heizbalg-Vorrichtung, eine Kennung für eine Reifenheiz-Pressvorrichtung, in welcher die Heizbalg-Vorrichtung montiert ist, montiert war oder montiert werden wird (gegebenenfalls inklusive entsprechender Montagezeitpunkt), oder vergleichbare Daten bezüglich der Heizbalg-Vorrichtung zugeordnet.

In einer weiteren vorteilhaften Ausgestaltung können beispielsweise in der Gerätedatenbank einer Pressvorrichtungs-ID-Information eine Kennung für einen Montagezeitpunkt der Heizbalg-Vorrichtung in der Reifenheiz-Pressvorrichtung, eine Kennung für eine Montagezeitpunkt der Heizbalg Vorrichtung (z.B. inklusive einer entsprechenden Heizbalg-ID-Information, einer entsprechenden Spannvorrichtungs-ID-Information sowie eines entsprechenden Montagezeitpunkts), eine Heizbalg-ID-Information, eine Spannvorrichtungs-ID-Information und/oder weitere Produktions-Parameter oder Sensorwerte (jeweiligen Zeitpunkts-Kennungen), die im Rahmen des Betriebs der Reifenheiz-Pressvorrichtung verwendet wurden bzw. gemessen wurden, zugeordnet sein.

Weitere vorteilhafte Ausgestaltungen finden sich in den Unteransprüchen.

Nachfolgend wird die vorliegende Erfindung beispielhaft mit Bezug auf die beigefügten Figuren näher erläutert.

Es zeigen:
Figur 1: Schematische Darstellung einer Reifenheiz-Pressvorrichtung;
Figur 2: Schematische Darstellung des Aufbaus einer Heizbalg-Montageeinheit inklusive der Sensorik zum Auslesen entsprechender ID-Informationen;
Figur 3: Schematische Darstellung einer geöffneten Reifenheizpresse mit eingebauter Heizbalg-Montageeinheit sowie Fahrzeugreifen und Sensorik zum Auslesen entsprechender ID-Informationen.

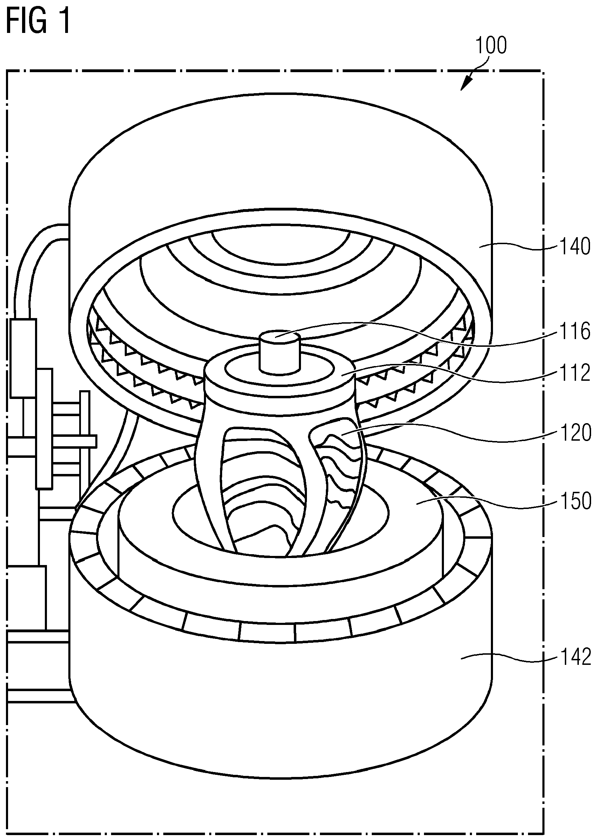

Figur 1 zeigt ein Ausführungsbeispiel für eine Reifenheiz-Pressvorrichtung 100 gemäß der vorliegenden Beschreibung. Dabei sind der Einfachheit halber in Figur 1 nur einige der wesentlichen Teile einer solchen Reifenheiz-Pressvorrichtung 100 (auch "Reifenheizpresse" 100 genannt) bezeichnet. Für weitere Details zu derartigen Reifenheiz-Pressvorrichtungen 100 wird auf die zugehörige Fachliteratur verwiesen.

Die Reifenheizpresse 100 ist zum Vulkanisieren eines Fahrzeugreifens 150 ausgebildet und eingerichtet. Zum Vulkanisieren des Fahrzeugreifens 150 umfasst die Reifenheizpresse 100 eine untere Reifenform 142 sowie eine obere Reifenform 140 welche den Fahrzeugreifens 150 während des Vulkanisiervorgangs umgeben. In Figur 1 sind die obere Reifenform 140 sowie die untere Reifenformen 142 in einem geöffneten Zustand dargestellt, welcher zum Beladen mit dem Fahrzeugreifen bzw. Reifenrohling 150 verwendet wird. Während des Vulkanisiervorgangs des Fahrzeugreifens bzw. Reifenrohlings 150 liegt die obere Reifen-form 140 jeweils auf der unteren Reifenform 142 auf und bilden so einen geschlossenen Zustand.

Zur Unterstützung des Vulkanisierens des Fahrzeugreifens 150 umfasst die Reifenheizpresse 100 einen Heizbalg 120, welcher in Figur 1 in einem entlüfteten bzw. abgelassenen Zustand dargestellt ist. Der Heizbalg ist an Spannringen montiert, von welchen in Figur 1 nur ein oberer Spannring 112 dargestellt ist. Vermittels eines Spannringträgers 116 werden die Spannringe 116 mit dem daran montierten Heizbalg 120 dann in der Reifenheizpresse 100 montiert.

Im Rahmen des Vulkanisiervorgangs des Fahrzeugreifens 150 wird der Heizbalg 120 mit heißem Dampf unter hohem Druck befüllt, dehnt sich innerhalb des Fahrzeugreifens 150 aus und presst diesen auf diese Weise gegen die untere 142 bzw. obere Reifenform 140. Auf diese Weise können neben dem eigentlichen Vulkanisieren des Reifenmaterials beispielsweise weiterhin ein Reifenprofil und auch andere reliefartige Strukturen in den Fahrzeugreifen 150 eingeprägt werden.

Der hier genannte heiße Dampf zum Befüllen des Heizbalgs 120 ist nur ein Beispiel für die verschiedensten in solchen Reifenheiz-Pressvorrichtungen 100 verwendbare Gase bzw. Flüssigkeiten. Diese können im Rahmen des Vulkanisiervorgangs beispielsweise Temperaturen von bis zu 100 Grad Celsius, vorteilhafterweise von bis zu 200 Grad Celsius und weiterhin vorteilhafterweise bis zu 250 oder 300 Grad Celsius aufweisen.

Der Heizbalg 120 und das entsprechenden Medien-System kann weiterhin derart ausgebildet und eingerichtet sein, dass als Gase beispielsweise Luft, Wasserdampf, Stickstoff und/oder weitere Gase - u.a. auch mit den o.g. Temperaturen - verwendet werden können. Soll stattdessen z.B. eine Flüssigkeit verwendet werden, so wird häufig Wasser eingesetzt.

Der Heizbalg 120 kann dabei derart ausgebildet und eingerichtet sein, dass er, zumindest im Inneren eines Fahrzeugreifens, einem Druck von bis zu 30 bar oder mehr, oder auch einem Unterdruck bis zu -1 bar widerstehen kann. Auch das das entsprechende Mediensystem kann dann für diese Druckbereiche ausgelegt sein.

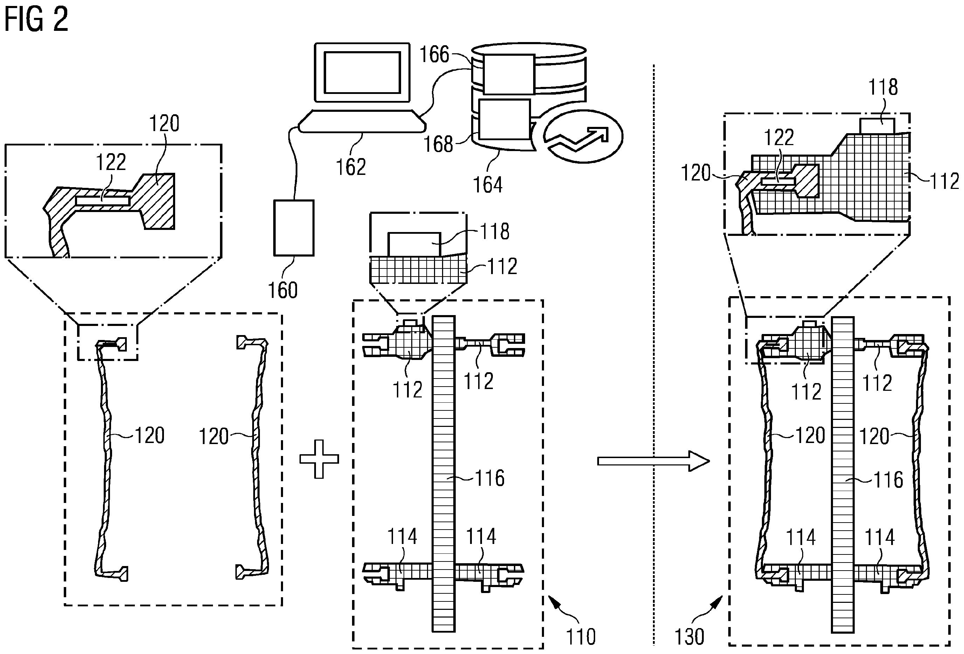

Figur 2 zeigt den Aufbau einer Heizbalg-Montageeinheit 130 aus dem Heizbalg 120 gemäß Figur 1 und einer Heizbalg-Halterung 110. Dabei ist die Heizbalg-Montageeinheit 130 rechts in Figur 2 dargestellt. Die Bestandteile der Heizbalg-Montageeinheit 130, nämlich der Heizbalg 120 sowie die Heizbalg Halterung 110, sind auf der linken Seite von Figur 2 zu sehen. Dabei ist die Heizbalg-Montageeinheit 130 ein Ausführungsbeispiel für eine Heizbalg-Vorrichtung gemäß der vorliegenden Beschreibung. Die Heizbalg-Montageeinheit 130, die Heizbalg Halterung 110 sowie der Heizbalg 120 sind dabei jeweils in einem Querschnitt dargestellt und zumindest im wesentlichen rotationssymmetrisch aufgebaut.

Die Heizbalg-Halterung 110 umfasst den bereits in Figur 1 dargestellten oberen Spannring 112 zur Fixierung eines oberen Randwulsts des Heizbalgs 120, sowie einen unteren Spannring 114 zur Fixierung eines unteren Randwulsts des Heizbalgs 120. Der obere 112 und untere Spannring 114 sind an einem Spannringträger 116 montiert. Dabei dient der Spannringträger 116 der Fixierung der Spannringe 112, 114 sowie der Montage der Heizbalg-Montageeinheit 130 in der in Figur 1 dargestellten Reifenheizpresse 100.

Der Heizbalg 120 umfasst ein Heizbalg-RFID-Element 122, in welchem eine eindeutige Heizbalg-Kennung (z.B. eine Heizbalg-Seriennummer) gespeichert ist. Diese Heizbalg-Kennung ist ein Beispiel für eine Heizbalg-ID-Information gemäß der vorliegenden Beschreibung. Die Heizbalg-Kennung ist mit einem RFID-Leser 160 aus dem Heizbalg-RFID-Chip 122 auslesbar und über einen Computer 162 z.B. in einer Datenbankspeichereinrichtung 164 oder einem Datenbank-Server 164 speicherbar bzw. gespeichert.

Die Datenbankspeichereinrichtung 164 bzw. der Datenbank-Server 164 umfasst dabei eine Gerätedatenbank 166 zur Speicherung von Gerätedaten bezüglich der Reifenheizpresse 100 und ihren Komponenten, insbesondere auch bezüglich der Heizbalg-Montageeinheit 130, dem Heizbalg 120 und/oder der Heizbalg-Vorrichtung. Weiterhin umfasst die Datenbankspeichereinrichtung 164 bzw. der Datenbank-Server 164 eine Produktionsdatenbank 168 bezüglich mit der Reifenheizpresse 100 durchgeführten Produktionstätigkeiten und/oder bezüglich durch die Reifenheizpresse 100 gefertigter Produkte. Die Gerätedatenbank 166 ist eine mögliche Ausgestaltung einer Gerätedatenbank gemäß der vorliegenden Beschreibung. Die Produktionsdatenbank 168 ist eine mögliche Ausgestaltung einer Produktionsdatenbank gemäß der vorliegenden Beschreibung.

Auf dem oberen Spannring 112 der Heizbalg-Halterung 110 ist ein Spannring-RFID-Chip 118 angebracht, in welchem eine eindeutige Halterungs-Kennung für die Heizbalg-Halterung 110 sowie die Heizbalg-Kennung des an der Halterung 110 montierten Heizbalgs 120 gespeichert ist. Auch hier lassen sich die Halterungs-Kennung und die Heizbalg-Kennung über den RFID-Leser 160 Auslesen. Diese Kennungen werden dann über den PC 162 in der Gerätedatenbank 166 derart gespeichert, dass die Heizbalg-Kennung der Halterungs-Kennung zugeordnet ist.

Bei einem Zusammenbau der Heizbalg-Halterung 110 wird dann vor dem Zusammenbau die Heizbalg-Kennung mit dem RFID-Leser 160 aus dem Heizbalg-RFID-Chip 122 ausgelesen und dann im PC 162 zwischengespeichert. Nachfolgend wird die Halterungs-Kennung ebenfalls mit dem RFID-Leser 160 aus dem Spannring-RFID-Chip 118 ausgelesen und dann gemeinsam mit der bereits ausgelesenen Heizbalg-Kennung in der Gerätedatenbank 166 derart gespeichert, dass beide Kennungen einander zugeordnet sind und durch eine Eingabe einer der Kennungen die jeweils andere Kennung von der Gerätedatenbank 166 ermittelt werden kann. Weiterhin kann der Kombination aus Heizbalg-Kennung und Halterungs-Kennung noch ein Montagezeitpunkt für die Heizbalg-Montageeinheit 130, ein Heizbalg-Typ, eine Heizbalg-Chargennummer und/oder ein Heizbalg-Hersteller zugeordnet sein und ebenfalls entsprechend in der Gerätedatenbank 166 gespeichert sein.

In einer alternativen Ausgestaltung wird beim Zusammenbau der Heizbalg-Halterung 110 die Heizbalg-Kennung mit dem RFID-Leser 160 aus dem Heizbalg-RFID-Chip 122 ausgelesen. Der RFID-Leser 160 ist in dieser Alternative zusätzlich auch zum Senden von Informationen ausgebildet und eingerichtet. In einem nachfolgenden Schritt wird dann die ausgelesene Heizbalg-Kennung durch den RFID-Leser 160 an den Spannring-RFID-Chip 118 übertragen und dort parallel zur bereits gespeicherten Halterung-Kennung ebenfalls gespeichert. Weiterhin wird ebenfalls wiederum ein Montagezeitpunkt für die Heizbalg-Montageeinheit 130 erfasst und ebenfalls über den RFID-Leser 160 an den Spannring-RFID-Chip 118 übertragen und dort parallel zur Halterungs-Kennung und der Heizbalg-Kennung gespeichert.

Im folgenden Ausführungsbeispiel wird davon ausgegangen, dass beim Zusammenbau der Heizbalg-Halterung 130 die zweite der vorstehend genannten Alternativen durchgeführt wurde und die Heizbalg-Kennung im Spannring-RFID-Chip gespeichert ist.

In Figur 2 auf der rechten Seite oben ist in einer Detaildarstellung der zusammengebauten Heizbalg-Montageeinheit 130 dargestellt, wie unter Verwendung des oben genannten Randwulsts der Heizbalg 120 im oberen Spannring 112 fixiert ist. Der Heizbalg-RFID-Chip 122 ist im Randbereich des Heizbalgs 120 angebracht, da dort beim Expandieren des Heizbalgs 120 im Rahmen eines Vulkanisiervorgangs die geringste mechanische Belastung und damit die geringste Schädigungswahrscheinlichkeit für den Heizbalg-RFID-Chip 122 auftritt. Allerdings ist dann, wie dargestellt der Heizbalg-RFID-Chip 122 vom Material oberen Spannring 112 umgeben, der in der Regel aus Metall gefertigt ist. Dies führt dazu, dass im dargestellten, in die Heizbalg-Halterung 110 eingebauten Zustand des Heizbalgs 120 das Metall des oberen Spannrings 112 den Heizbalg-RFID-Chip 122 derart abschirmt, dass die darin gespeicherte Information vom RFID-Leser 160 nicht oder nur schwierig auslesbar ist.

Um auch im dargestellten zusammengebauten Zustand der Heizbalg-Montageeinheit 130 die Heizbalg-Kennung ermitteln zu können, gibt es im vorliegenden Ausführungsbeispiel zwei Möglichkeiten. Eine erste Möglichkeit besteht darin, die Heizbalg-Kennung mit dem RFID-Leser 160 unmittelbar aus dem Spannring-RFID-Chip 118 auszulesen, indem sie ja im Rahmen der zweiten oben genannten Alternative gespeichert ist. Eine zweite Möglichkeit besteht darin, mit dem RFID-Leser 160 die Halterungs-Kennung für die Heizbalg-Halterung 110 aus dem Spannring-RFID-Chip 118 auszulesen und dann gemäß der oben dargestellten ersten Alternative über den PC 162 und die Gerätedatenbank 166 die entsprechende Heizbalg-Kennung zu ermitteln.

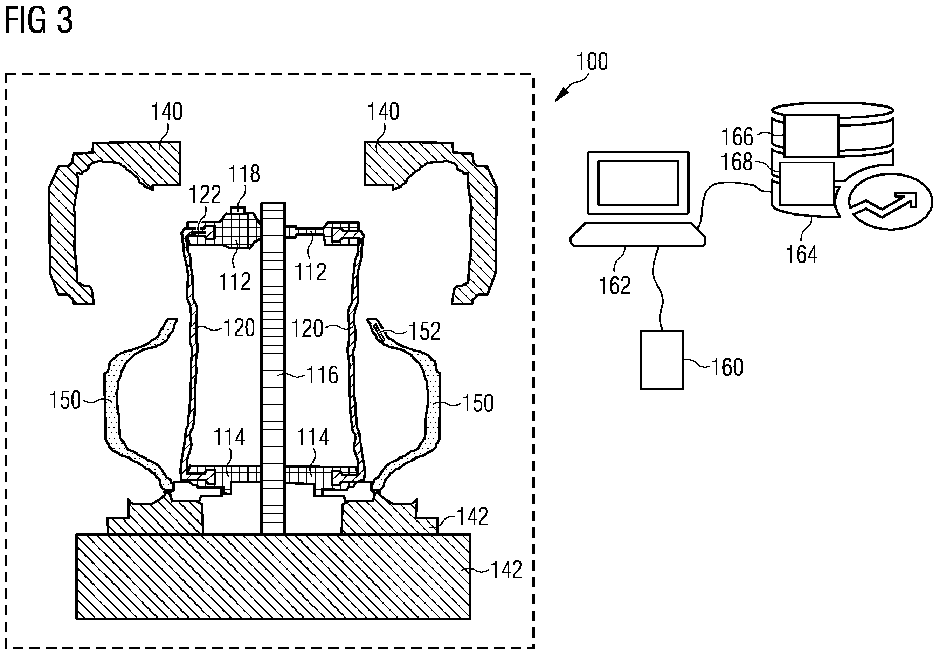

Figur 3 zeigt die in Zusammenhang mit Figur 2 erläuterte Heizbalg-Montageeinheit 130, 114, 116, 118, 120 innerhalb der Reifenheizpresse 100 in einem geöffneten Zustand der Reifenheizpresse 100 in einer Querschnittsansicht. Dabei werden in Figur 3 viele der bereits in den Figuren 1 und 2 dargestellten und dazu erläuterten Komponenten gezeigt, wobei gleiche Bezugszeichen jeweils gleichen Komponenten entsprechen.

In Figur 3 werden die Komponenten der bereits in Figur 2 dargestellten Heizbalg-Montageeinheit 130, 114, 116, 118, 120 gezeigt, wobei die Komponenten der Heizbalg-Montageeinheit 130, 114, 116, 118, 120 in der Reifenheizpresse 100 montiert sind. Weiterhin sind in Figur 3 die obere Reifenform 140 und die untere Reifenform 142 dargestellt, die zum Vulkanisieren des Fahrzeugreifens 150, der ebenfalls in Figur 3 dargestellt ist, ausgebildet und eingerichtet sind. Der Fahrzeugreifen 150 umfasst einen Reifen-RFID-Chip 152, der im Randbereich der Gummimasse des Fahrzeugreifens 150 eingebettet ist und in welchem eine Reifen-Kennung gespeichert ist. Die Reifen-Kennung ist dabei eine eindeutige Kennung für den Reifen, beispielsweise eine entsprechende Seriennummer und gegebenenfalls eine zusätzliche Chargennummer. Der Fahrzeugreifen 150 ist dabei ein Ausführungsbeispiel für einen Fahrzeuggreifen gemäß der vorliegenden Beschreibung oder ein Ausführungsbeispiel für einen zu vulkanisierenden Fahrzeuggreifen gemäß der vorliegenden Beschreibung.

Weiterhin ist in Figur 3 wiederum die RFID-Leseeinrichtung 160 dargestellt, die mit dem PC 162 und weiterhin mit dem Datenbankspeicher 164 gekoppelt ist, wobei der Datenbankspeicher 164 die Gerätedatenbank 166 sowie die Produktionsdatenbank 168 umfasst.

Figur 3 zeigt einen Zustand der Reifenheizpresse 100, nachdem der Fahrzeugreifen 150 in einem Produktionsbetrieb vor einem Vulkanisieren des Fahrzeugreifens 150 in die Reifenheizpresse eingebracht wurde. Im Rahmen des laufenden Produktionsbetriebs wurden vor dem in Figur 3 dargestellten Fahrzeugreifen 150 bereits weitere Fahrzeuggreifen in der Reifenheizpresse 150 mit der Heizbalg-Montageeinheit 130, 114, 116, 118, 120 produziert. Die Zahl der bislang mit dem Heizbalg 120 produzierten Reifen wurde ebenfalls im Spannring-RFID-Chip 118 gespeichert. Nach dem Einbringen des Fahrzeugreifens 150 in die Reifenheizpresse 100 wird nun vermittels der RFID-LeseEinrichtung sowohl die Reifen-Kennung aus dem Reifen-RFID-Chip 152 ausgelesen als auch die Heizbalg-Kennung sowie die Zahl der mit dem Heizbalg 120 bereits produzierten Fahrzeuggreifen aus dem Spannring-RFID-Chip 118. Dann wird die Zahl der mit dem Heizbalg 120 bereits produzierten Fahrzeuggreifen um eins erhöht und mit der RFID-Leseeinrichtung 160 wiederum an den Spannring-RFID-Chip übertragen und dort gespeichert.

Weiterhin wird in der Produktionsdatenbank 168 ein Datensatz bezüglich des Fahrzeugreifens 150 erzeugt oder ein bereits bestehender Datensatz bezüglich des Fahrzeugreifens 150 ergänzt. Dabei wird im genannten Datensatz der Reifen-Kennung die Heizbalg-Kennung zugeordnet. Weiterhin können diesem Datensatz dann auch weitere Gerätekennungen, wie beispielsweise die Halterungs-Kennung oder eine ID für die Reifenheizpresse 100 zugeordnet sein. Der dem Fahrzeugreifen 150 zugeordneten Datensatz in der Produktionsdatenbank 168 kann weiterhin Produktionsdaten, wie beispielsweise die Zahl der mit dem Heizbalg 120 vor der Lokalisierung des Fahrzeugreifens 150 bereits produzierten Reifen und/oder andere mit dem Vulkanisiervorgang des Fahrzeugreifens 150 zusammenhängende Produktionsdaten gespeichert werden.

Die Speicherung der Anzahl der mit einem bestimmten Heizbalg 120 produzierten Fahrzeugreifen innerhalb des Spannring-RFID-Chips 118 hat beispielsweise den Vorteil, dass, auch wenn die Heizbalg-Montageeinheit 130 der Reifenheizpresse 100 entnommen und durch eine andere Heizbalg-Montageeinheit ersetzt wird, beispielsweise zur Produktion einer anderen Sorte von Fahrzeugreifen, durch entsprechendes Auslesen des Spannring-RFID-Chips 118 die Zahl der bisher mit dem eingebauten Heizbalg 120 produzierten Reifen ermittelbar ist. Da üblicherweise mit einem Heizbalg 120 bis zu einhundert oder bis zu mehreren hundert Fahrzeugreifen produziert werden können, ist so beispielsweise beim Einbau einer Heizbalg-Montageeinheit 130 erkennbar, wie viele Fahrzeugreifen mit dem in der Heizbalg-Montageeinheit 130 verbauten Heizbalg 120 bereits gefertigt wurden und ggf. wieviel Fahrzeugreifen damit noch sinnvoll fertigbar sind oder sein könnten.

## Patentansprüche

1. Heizbalg-Vorrichtung (130) für eine Reifenheiz-Pressvorrichtung (100) zum Vulkanisieren eines Fahrzeugreifens (150),
wobei die Heizbalg-Vorrichtung (130) zur Unterstützung eines Vulkanisiervorgangs eines in der Reifenheiz-Pressvorrichtung (100) befindlichen Fahrzeugreifens ausgebildet und eingerichtet ist, und
wobei die Heizbalg-Vorrichtung (130) einen elastischen Heizbalg (120) sowie eine Einspannvorrichtung (110) zur Befestigung des elastischen Heizbalgs (120) umfasst,
wobei der Heizbalg eine Heizbalg-ID-Komponente (122) umfasst, die eine Heizbalg-ID-Information zur eindeutigen Identifikation des Heizbalgs (120) umfasst,
und wobei die Heizbalg-Vorrichtung (130) weiterhin zur Montage in der Reifenheiz-Pressvorrichtung (100) ausgebildet und eingerichtet ist,
**dadurch gekennzeichnet,**
**dass** die Einspannvorrichtung (110) eine Spannvorrichtungs-ID-Komponente (118) umfasst, die eine Spannvorrichtungs-Information umfasst,
wobei die Spannvorrichtungs-ID-Komponente (118) derart ausgebildet, eingerichtet und an der Einspannvorrichtung (110) angebracht ist, dass die Spannvorrichtungs-Information maschinell erfassbar ist,
und **dass** weiterhin durch Erfassen der Spannvorrichtungs-Information die Heizbalg-ID-Information ermittelbar ist.

2. Heizbalg-Vorrichtung gemäß Anspruch 1,
**dadurch gekennzeichnet,**
**dass** die Spannvorrichtungs-ID-Komponente (118) derart ausgebildet, eingerichtet und an der Einspannvorrichtung (110) angebracht ist,
sowie dass die Heizbalg-Vorrichtung (130) derart zur Montage in der Reifenheiz-Pressvorrichtung (100) vorgesehen, ausgebildet und eingerichtet ist,
**dass** die Spannvorrichtungs-Information bei in der Reifenheiz-Pressvorrichtung (100) montierter Heizbalg-Vorrichtung (130) maschinell erfassbar ist.

3. Heizbalg-Vorrichtung gemäß Anspruch 1 oder 2,
**dadurch gekennzeichnet,**
**dass** die Spannvorrichtungs-ID-Komponente (118) als elektronische Komponente ausgebildet und eingerichtet ist,
und **dass** die Spannvorrichtungs-Information bei in der Reifenheiz-Pressvorrichtung (100) montierter Heizbalg-Vorrichtung (130) drahtlos maschinell erfassbar ist.

4. Heizbalg-Vorrichtung gemäß einem der Ansprüche 1 bis 3,
**dadurch gekennzeichnet,**
**dass** die Spannvorrichtungs-Information die Heizbalg-ID-Information umfasst.

5. Heizbalg-Vorrichtung gemäß einem der Ansprüche 1 bis 4,
**dadurch gekennzeichnet,**
**dass** die Spannvorrichtungs-Information eine Nutzungsinformation bezüglich des Heizbalgs (120) umfasst und/oder eine Zusatzinformation bezüglich des Heizbalgs (120) umfasst.

6. Heizbalg-Vorrichtung gemäß einem der Ansprüche 1 bis 5, **dadurch gekennzeichnet,**
**dass** die Spannvorrichtungs-Information eine Spannvorrichtungs-ID-Information zur eindeutigen Identifikation der Einspannvorrichtung (110) umfasst,
und **dass** weiterhin eine Gerätedatenbank (166) vorgesehen ist, in welcher die Heizbalg-ID-Information der Spannvorrichtungs-ID-Information zugeordnet ist.

7. Reifenheiz-Pressvorrichtung (100) zum Vulkanisieren eines Fahrzeugreifens (150),
**dadurch gekennzeichnet,**
**dass** die Reifenheiz-Pressvorrichtung (100) eine Heizbalg-Vorrichtung (130) gemäß einem Ansprüche 1 bis 6 umfasst.

8. Reifenheiz-Pressvorrichtung gemäß Anspruch 7,
**dadurch gekennzeichnet,**
**dass** die Heizbalg-Vorrichtung (130) gemäß Anspruch 6 ausgebildet ist,
**dass** der Reifenheiz-Pressvorrichtung (100) eine Pressvorrichtungs-ID-Information zugeordnet ist,
und **dass** in der Gerätedatenbank (166) die Pressvorrichtungs-ID-Information der Spannvorrichtungs-ID-Information und/oder der Heizbalg-ID-Information zugeordnet ist.

9. Reifenproduktionssystem, umfassend
eine Reifenheiz-Pressvorrichtung (100) gemäß einem der Ansprüche 7 oder 8,
sowie eine Gerätedatenbank (166) gemäß Anspruch 6 oder 8.

10. Reifenproduktionssystem gemäß Anspruch 9,
**dadurch gekennzeichnet,**
**dass** weiterhin eine Produktionsdatenbank (168) vorgesehen ist,
wobei nach dem Vulkanisieren eines zu vulkanisierenden Fahrzeugreifens (150) durch die Reifenheiz-Pressvorrichtung (100) in der Produktionsdatenbank (168) die Heizbalg-ID-Information einer Reifen-ID-Information des Fahrzeugreifens (150) zugeordnet ist.

11. Verfahren zur Montage einer Heizbalg-Vorrichtung (130) nach einem der Ansprüche 1 bis 6,
**gekennzeichnet durch** die nachfolgend genannten Schritte:
- Erfassen der Heizbalg-ID-Information,
- Speichern der Heizbalg-ID-Information derart, dass **durch** Erfassen der Spannvorrichtungs-Information die Heizbalg-ID-Information ermittelbar ist,
- montieren der Heizbalg-Vorrichtung (130) **durch** Anbringen des elastischen Heizbalgs (120) an der Einspannvorrichtung (110) .

12. Verfahren gemäß Anspruch 11
**dadurch gekennzeichnet,**
**dass** das Speichern der Heizbalg-ID-Information in der Spannvorrichtungs-ID-Komponente (118) erfolgt.

13. Verfahren gemäß Anspruch 11 oder 12,
**dadurch gekennzeichnet,**
**dass** die Heizbalg-Vorrichtung (130) gemäß Anspruch 6 ausgebildet und eingerichtet ist,
**dass** neben der Heizbalg-ID-Information auch die Spannvorrichtungs-ID-Information erfasst wird,
und **dass** die Spannvorrichtungs-ID-Information und die Heizbalg-ID-Information in der Gerätedatenbank (166) in einer Weise gespeichert werden, dass die Heizbalg-ID-Information der Spannvorrichtungs-ID-Information zugeordnet ist.

14. Verfahren zum Vulkanisieren eines Fahrzeugreifens (150) mit einer Reifenheiz-Pressvorrichtung (100) gemäß einem der Ansprüche 7 oder 8,
**gekennzeichnet durch** die nachfolgenden Verfahrensschritte:
Einbringen eines zu vulkanisierenden Fahrzeugreifens (150) in die Reifenheiz-Pressvorrichtung, wobei dem Fahrzeugreifen (150) eine Reifen-ID-Information zugeordnet ist, Vulkanisieren des zu vulkanisierenden Fahrzeugreifens (150), Entnehmen des vulkanisierten Fahrzeugreifens (150),
wobei im Rahmen des vorstehend dargestellten VulkanisierVorgangs die nachfolgend genannten weiteren Verfahrensschritte ausgeführt werden:
Erfassen der Spannvorrichtungs-Information der Spannvorrichtungs-ID-Komponente (118) mit einer Erfassungseinrichtung (160),
Speichern der Spannvorrichtungs-Information und der Reifen-ID-Information in einer Produktionsdatenbank (168) in einer Weise, dass die Heizbalg-ID-Information der Reifen-ID-Information zugeordnet ist.

15. Computerlesbares Speichermedium (164), umfassend eine Produktionsdatenbank (168) gemäß Anspruch 10 oder 14 für eine Reifenheiz-Pressvorrichtung (100) gemäß einem der Ansprüche 7 oder 8,
**dadurch gekennzeichnet,**
**dass** in der Produktionsdatenbank (168) die Heizbalg-ID-Information der Reifen-ID-Information zugeordnet ist.

16. Computerlesbares Speichermedium (164), umfassend eine Gerätedatenbank (166) gemäß Anspruch 6, 8 oder 13 für eine Heizbalg-Vorrichtung (130) gemäß einem der Ansprüche 1 bis 6 oder eine Reifenheiz-Pressvorrichtung (100) gemäß einem der Ansprüche 7 oder 8,
**dadurch gekennzeichnet,**
**dass** in der Gerätedatenbank (166) die Heizbalg-ID-Information der Spannvorrichtungs-ID-Information zugeordnet ist.
